(19) Europäisches Patentamt
European Patent Office
Office européen des brevets

(11) Veröffentlichungsnummer : **0 055 219**
**B1**

(12) # EUROPÄISCHE PATENTSCHRIFT

(45) Veröffentlichungstag der Patentschrift : **07.08.85**

(21) Anmeldenummer : **81810504.1**

(22) Anmeldetag : **17.12.81**

(51) Int. Cl.⁴ : **C 09 B 3/00**, C 09 B 5/24, C 09 B 7/00, C 09 B 57/00, C 09 B 69/00

(54) **Farbstoffe, deren Herstellung und Verwendung.**

(30) Priorität : **23.12.80 CH 9520/80**

(43) Veröffentlichungstag der Anmeldung : **30.06.82 Patentblatt 82/26**

(45) Bekanntmachung des Hinweises auf die Patenterteilung : **07.08.85 Patentblatt 85/32**

(84) Benannte Vertragsstaaten : **CH DE FR GB LI**

(56) Entgegenhaltungen :
**DE-A- 1 444 730**
**DE-A- 1 644 534**
**DE-A- 2 616 486**
**FR-A- 1 396 903**

(73) Patentinhaber : **CIBA-GEIGY AG**
**Postfach**
**CH-4002 Basel (CH)**

(72) Erfinder : **Adam, Jean-Marie, Dr.**
**3, Rue de Montreux**
**CH-68300 Saint-Louis (FR)**
Erfinder : **Tzikas, Athanassios, Dr.**
**Muttenzerstrasse 78**
**CH-4133 Pratteln (CH)**

**EP 0 055 219 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind Farbstoffe der Formel

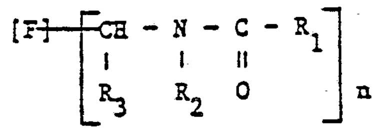 (1)

worin F der Rest eines indigoiden Farbstoffes, eines Benzothioxanthens oder eines mindestens 4 alicyclische und/oder heterocyclische, kondensierte Sechsringe und mindestens zwei Ringketogruppen enthaltenden nicht wasserlöslichen, aromatischen Farbstoffes ist, $R_1$ ein Rest der Formel

$$—A—Q \qquad (2)$$

ist, worin A ein gegebenenfalls substituierter $C_{1-4}$-Alkylenrest und Q ein gegebenenfalls quaternisierter basischer Rest ist, $R_2$ Wasserstoff oder ein gegebenenfalls substituierter $C_{1-4}$-Alkylrest ist, und $R_3$ Wasserstoff, ein gegebenenfalls substituierter $C_{1-4}$-Alkylrest, ein gegebenenfalls substituierter Arylrest, ein $C_{1-4}$-Alkoxycarbonylrest oder ein N,N-Di-$C_{1-4}$-Alkylcarboxyamidrest und n 1, 2, 3 oder 4 ist, mit Ausnahme des Farbstoffes der Formel

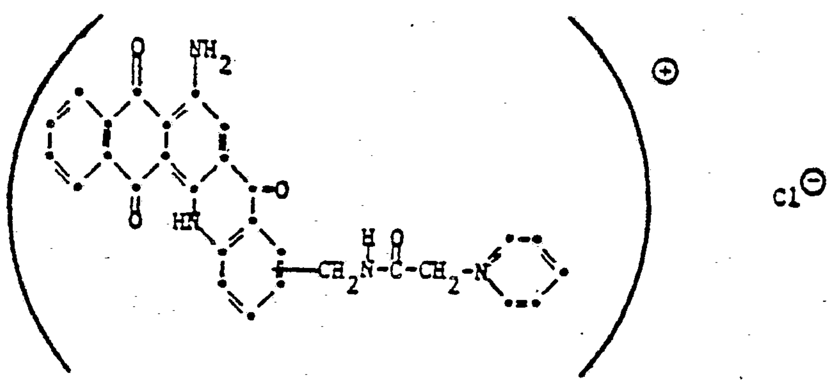

Als Farbstoffreste F kommen verküpbare oder nicht verküpbare chinoide Farbstoffreste in Betracht, z. B. Indanthron-, Flavanthron-, Anthrachinonacridon-, Anthrachinonthioxanthon-, Thiophenbenzanthron-, Anthrachinoncarbazol-, Pyranthron-, Anthanthron-, Dibenzpyrenchinon-, Isodibenzpyrenchinon-, Dibenzanthron-, Isodibenzanthron-, Perylentetracarbonsäureimid-, Naphthoylenbenzimidazol- oder Naphtochinonfarbstoffe, indigoide Farbstoffe oder Perinon- oder Benzothioxanthenfarbstoffe.

Die Farbstoffreste können gegebenenfalls substituiert sein. Solche Substituenten sind beispielsweise Halogenatome, insbesondere Chlor, Fluor oder Brom, Alkyl-, Alkoxy-, Aryl-, Aryloxy-, Aralkyl-, Aralkoxy-, Arylamino-, Alkylthio, Arylthio-, Alkylamino-, Hydroxy-, Cyano- und Thiocyanogruppen. Mit Alkyl sind hier und im folgenden insbesondere Reste mit 1 bis 4 Kohlenstoffatomen gemeint, mit Aryl insbesondere Reste wie Phenyl-, Tolyl-, Chlorphenyl-, Methoxyphenyl- oder Naphthylreste und mit Aralkyl insbesondere der Benzylrest. Besonders wichtige Substituenten sind ausserdem die Acyl- und die Acylaminogruppe. Der Begriff Acyl umfasst vor allem Reste von aromatischen Carbon- oder Sulfonsäuren, insbesondere solchen der Benzolreihe oder niedrigmolekulare, d. h. 1 bis 4 Kohlenstoffatome enthaltende Alkanoyl- oder Alkylsulfonylreste, wie z. B. den Acetyl-, Benzoyl-, p-Chlorbenzoyl-, p-Phenylbenzoyl-, Benzolsulfonyl- oder p-Toluolsulfonylrest, ferner niedrigmolekulare Alkoxycarbonylreste sowie Sulfonsäureamid- oder Carbonsäureamidgruppen, deren Stickstoffatom mit Alkyl- oder Arylresten substituiert sein kann, wie z. B. den Aethoxycarbonyl-, Carbamoyl- oder Sulfamoylrest.

Unter nicht wasserlöslichen Farbstoffresten sind solche zu verstehen, die ganz oder im wesentlichen frei von anionischen wasserlöslichmachenden Gruppen sind, wie z. B. Carbonsäure, Sulfonsäure- und Schwefelsäureestergruppen.

Als Alkylreste kommen für $R_2$ und $R_3$ unabhängig voneinander geradkettig oder verzweigte Alkylreste in Betracht, die auch substituiert sein können, z. B. durch Halogen, wie Fluor, Chlor oder Brom, Alkoxy, wie Methoxy oder Aethoxy. Als Beispiele für $R_2$ und $R_3$ seien genannt : Methyl, Aethyl, Propyl, Isopropyl, Butyl, sec.-Butyl, Isobutyl, tert.-Butyl, Chlormethyl und Trichlormethyl.

Als Arylreste kommen für $R_3$ Arylreste der Benzol- oder Naphthalinreihe oder der heterocyclischen

Reihe in Betracht, die auch substituiert sein können, z. B. durch Halogen, wie Fluor, Chlor oder Brom, Alkyl, wie Methyl oder Aethyl, Alkoxy, wie Methoxy oder Aethoxy, oder die Nitrogruppe. Als Bespiele seien genannt : Phenyl, Chlorphenyl, Dichlorphenyl, Nitrophenyl, Naphthyl und Pyridyl. Vor allem ist $R_3$ als Arylrest ein Phenyl- oder Dichlorphenylrest.

Als Alkoxycarbonyl- oder N,N-Dialkylcarboxamidrest kommen für $R_3$ Reste in Betracht, die im Alkylteil einen Methyl-, Aethyl-, Propyl- oder Butylrest enthalten.

Als Alkylenreste A kommen beispielsweise in Betracht : Methylen, Aethylen, Propylen oder Butylen.

Bevorzugt sind besonders Farbstoffe der Formel (1), worin Q ein Rest der Formel

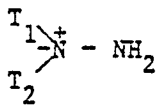 $A^-$ (3) , 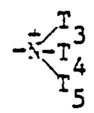 $A^-$ (4)

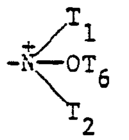 $A^-$ (5) oder 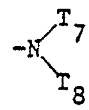 (6)

ist, worin in den Formeln (3) bis (6) $T_1$, $T_2$, $T_3$, $T_4$ und $T_8$ unabhängig voneinander ein gegebenenfalls durch Hydroxy substituierter $C_{1-4}$-Alkylrest, $T_5$ und $T_6$ unabhängig voneinander ein $C_{1-4}$-Alkylrest, $T_7$ Wasserstoff, ein gegebenenfalls durch Hydroxy substituierter $C_{1-4}$-Alkylrest, ein gegebenenfalls durch 1 bis 3 Methylgruppen substituierter Cyclohexylrest oder ein Phenylrest ist, oder worin die Reste $T_1$ und $T_2$, $T_3$ und $T_4$ oder $T_7$ und $T_8$ zusammen mit dem Stickstoffatom einen Pyrrolidin-, Piperidin-, Morpholin- oder Piperazinring bilden oder worin die Reste $T_3$, $T_4$ und $T_5$ zusammen mit dem Stickstoffatom einen Pyridiniumring oder einen Rest der Formel

$A^-$ 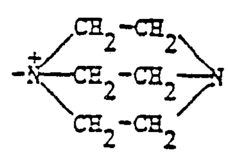 (7)

bilden und $A^-$ in der Formeln (3) bis (5) und (7) organisches oder anorganisches Anion ist, und F, $R_2$, $R_3$ und n die unter Formel (1) angegebenen Bedeutungen haben.

Als Alkylreste kommen für $T_1$, $T_2$, $T_3$, $T_4$, $T_7$ und $T_8$ unabhängig voneinander geradkettig oder verzweigte Alkylreste in Betracht, die auch durch Hydroxy substituiert sein können. Als Beispiele seien genannt : Methyl, Aethyl, Propyl, Isopropyl, Butyl, sec.-Butyl, Isobutyl, tert.-Butyl und β-Hydroxybutyl. Als Alkylreste kommen für $T_5$ und $T_6$ die oben angegebenen unsubstituierten Alkylreste in Betracht.

Als organische oder anorganische Anionen, $A^-$, in den Formeln (3), (4), (5) oder (7) kommen beispielsweise in Betracht : Chlorid, Bromid, Jodid oder Sulfat-, Disulfat-, Methylsulfat-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Malat-, Acetat-, Propionat-, Lactat-, Succinat-, Chloracetat-, Tartrat-, Methansulfonationen oder Benzoationen oder Komplexe Anionen, wie z. B. von Chlorzinkdoppelsalzen.

Besonders bevorzugt sind ebenfalls Farbstoffe der Formel (1), worin Q ein Rest der Formel (3), (4), (5), (6) oder (7) ist, $R_2$ Wasserstoff oder ein gegebenenfalls durch Chlor substituierter $C_{1-4}$-Alkylrest, $R_3$ Wasserstoff, ein gegebenenfalls durch Chlor substituierter $C_{1-4}$-Alkylrest oder ein gegebenenfalls substituierter Phenylrest ist, und F und n die unter Formel (1) angegebenen Bedeutungen haben.

Bevorzugt sind vor allem Farbstoffe der Formel (1), worin F ein Dibenzanthron-, Isodibenzanthron-, 16,17-Aethylendioxydibenzanthron-, 2,2'-Dibenzanthronyl-, 2,2'-Bisindolindigo-, 2,2'-Bisthionaphtenindigo-, cis- oder trans-Naphtoylenbenzimidazol-, Benzothioxanthen-, N,N'-Di-p-tolyl-perylentetracarbonsäurediimid-, N,N'-Di-p-phenäthoxynaphthalin-1,4,5,8-tetracarbonsäurediimid-, 5,5'-Bisnaphthyl-1,1',8,8'-tetracarbonsäure-dibenzimidazol-, 5,5'-Bisnaphthyl-1,1',8,8'-tetracarbonsäure-6'',6'''-dimethyldibenzimidazol, 5,5'-Bisnaphthyl-1,1',8,8'-tetracarbonsäure-5'',5''',6'',6'''-tetramethoxydibenzimidazol- oder 16,17-Methylendioxydibenzanthronfarbstoffrest oder ein Rest der Formel

(Siehe Figuren Seite 4 f.)

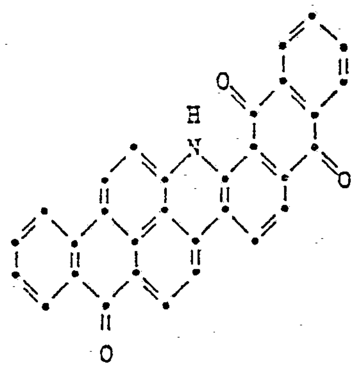

(8)

oder

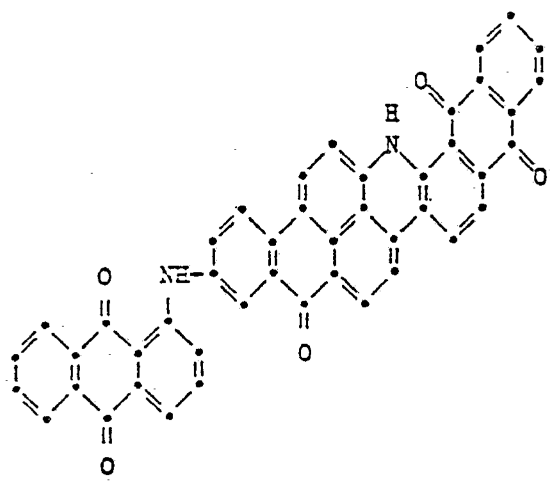

(9)

ist, A Methylen und Q ein Pyridiniumchloridrest, $R_2$ und $R_3$ Wasserstoff und n 1 oder 2 ist.

Wertvolle Vertreter dieser bevorzugten Farbstoffe sind die Farbstoffe der Formeln

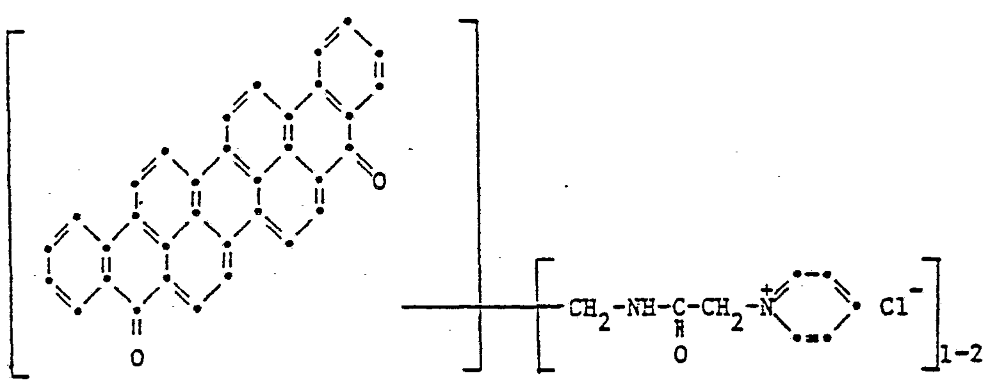

(10)

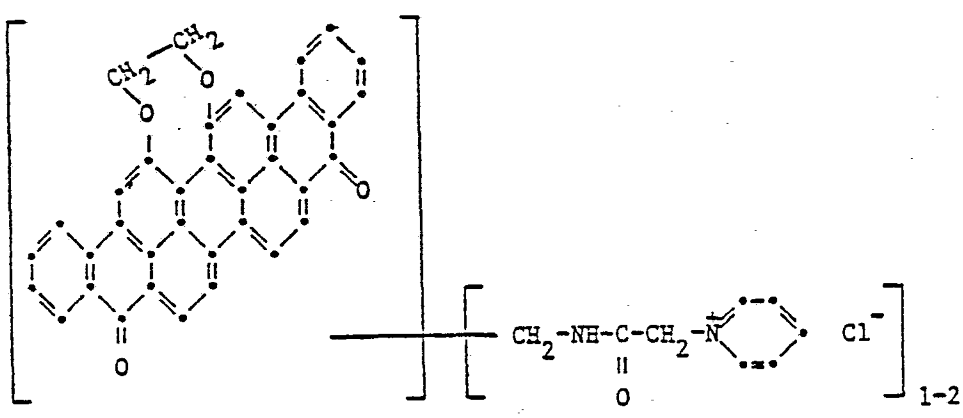

(11)

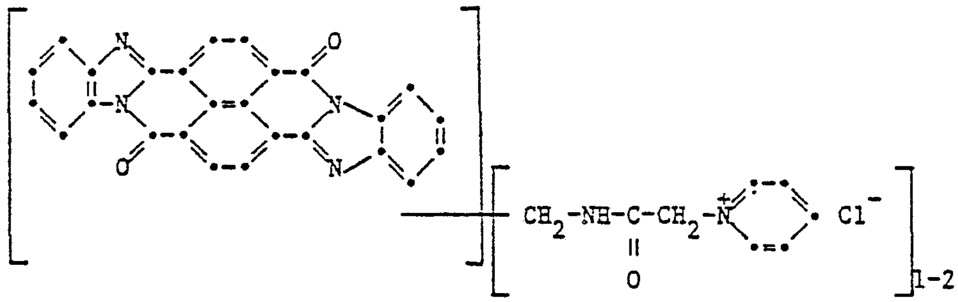

(12)

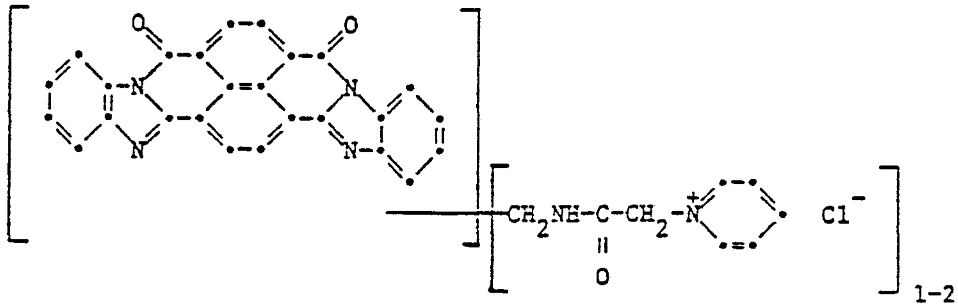

(13)

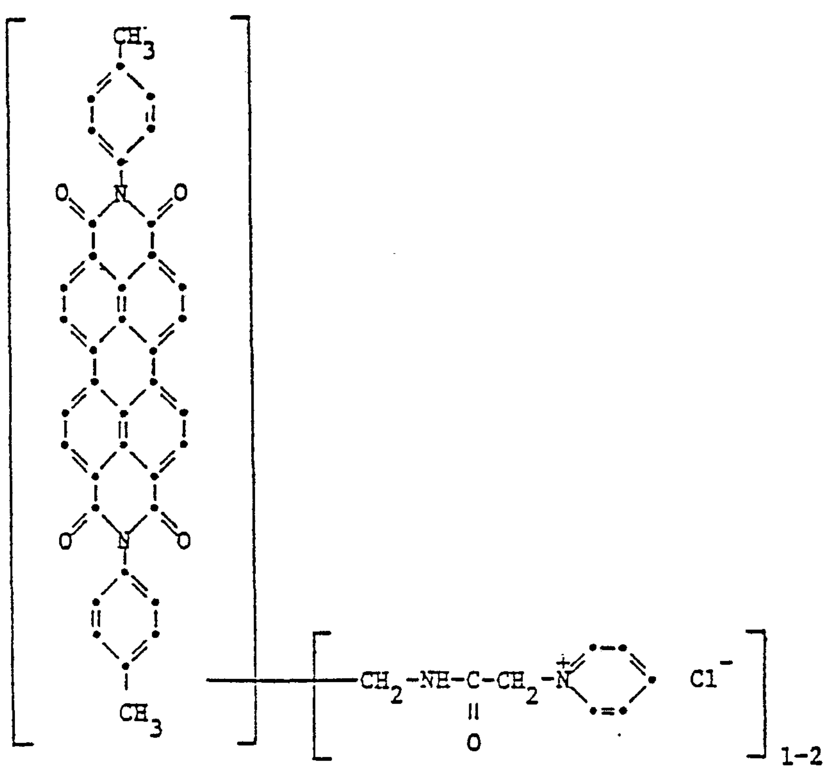

(14)

(Siehe Figuren Seite 6 f.)

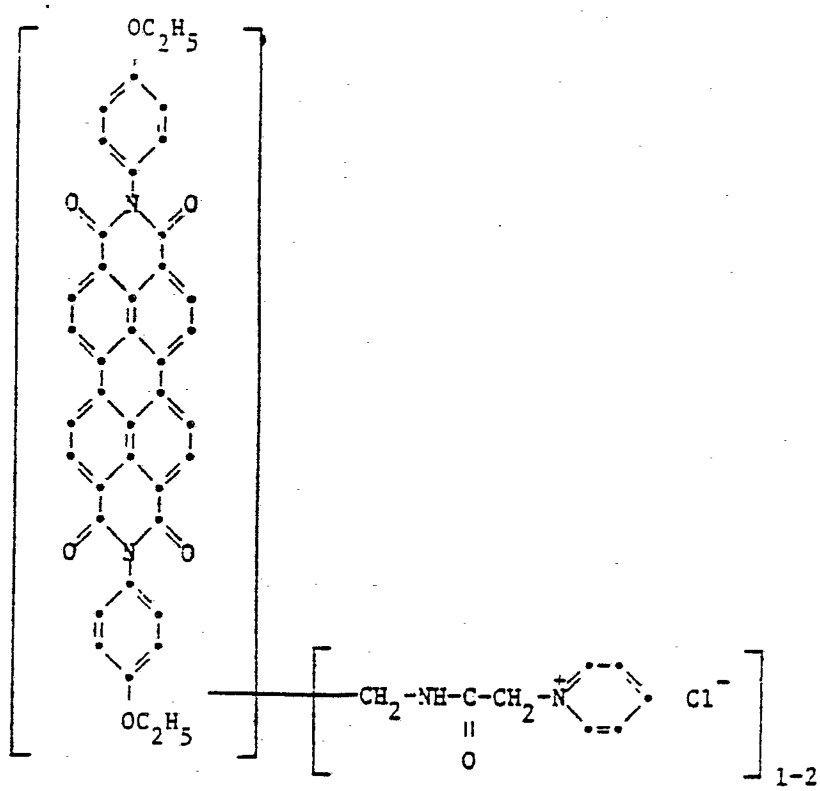

(15)

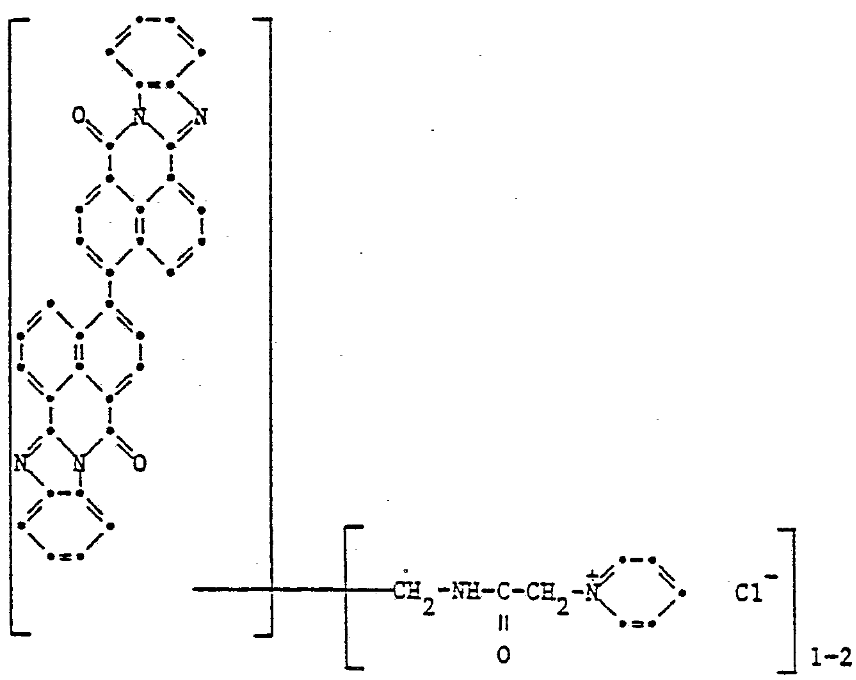

(16)

und

(Siehe Figur Seite 7 f.)

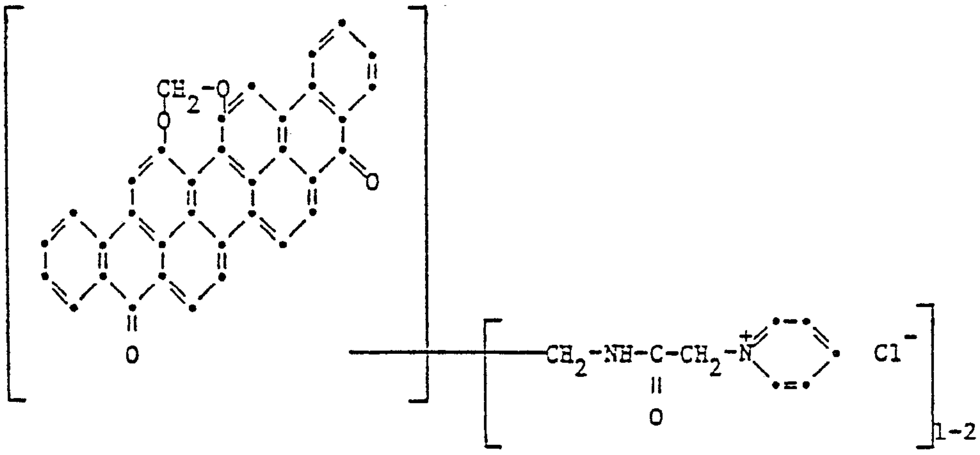

(17).

Besonders bevorzugt sind auch Farbstoffe der Formel

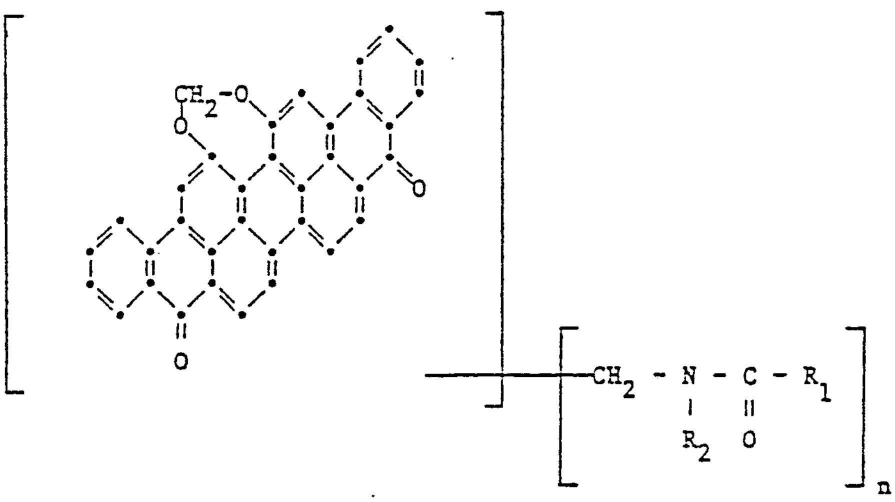

(30)

worin $R_1$, $R_2$ und n die unter Formel (1) angegebenen Bedeutungen haben.

Gegenstand der Erfindung sind auch Farbstoffmischungen, die als Mischungskomponenten Farbstoffe der Formel

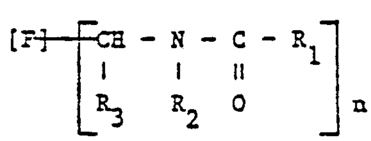

(1)

worin n in den einzelnen Komponenten unabhängig voneinander 1, 2, 3 oder 4 ist, und F, $R_1$, $R_2$ und $R_3$ in den einzelnen Komponenten gleich ist und gegebenenfalls eine Komponente der Formel

F—H (20)

enthalten, worin der Rest F in den Formeln (1) und (20) gleich ist, und F, $R_1$, $R_2$ und $R_3$ in den Formeln (1) und (20) die unter Formel (1) angegebenen Bedeutungen haben.

Die Herstellung der Farbstoffe der Formel (1) mit Ausnahme des Farbstoffes der Formel

(Siehe Figur Seite 8 f.)

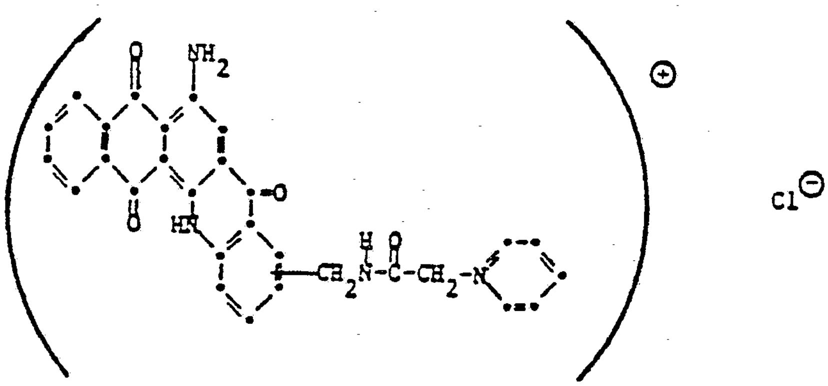

ist dadurch gekennzeichnet, dass man einen Farbstoff der Formel

$$F{-}H \qquad (20)$$

worin F die unter Formel (1) angegebene Bedeutung hat, mit mindestens einem Aequivalent einer Verbindung der Formel

$$HO-\underset{\displaystyle R_3}{\underset{|}{CH}}-\underset{\displaystyle R_2}{\underset{|}{N}}-\underset{\displaystyle O}{\underset{\|}{C}}-R_1 \qquad (21)$$

worin $R_1$ ein Rest der Formel

$$-A-X \qquad (22)$$

ist, worin A ein gegebenenfalls substituierter $C_{1-4}$-Alkylenrest und X ein in ein Anion überführbarer Rest ist, $R_2$ und $R_3$ die unter Formel (1) angegebenen Bedeutungen haben, konsendiert, und falls $R_1$ ein Rest der Formel (22) ist, das Reaktionsprodukt anschliessend mit mindestens einem Aequivalent einer Verbindung der Formel

$$Q' \qquad (23)$$

worin Q′ ein quaternisierbarer basischer Rest ist, zu einem Farbstoff der Formel (1) umsetzt.

Vorzugsweise verwendet man einen Ausgangsfarbstoff der Formel (20), worin F der Rest eines Indanthron-, Flavanthron-, Anthrachinon-, Acridon-, Anthrachinonthioxanthon-, Thiophenbenzanthron-, Anthrachinoncarbazol-, Pyranthron-, Anthanthron-, Dibenzpyrenchinon-, Isodibenzpyrenchinon-, Dibenzanthron-, Isodibenzanthron-, Perylentetracarbonsäureimid-, Naphtoylenbenzimidazol oder Naphtochinonfarbstoffes, ein indigoider Farbstoffrest oder ein Perinon- oder Benzothioxanthenfarbstoffrest ist, wobei die Farbstoffreste gegebenenfalls durch Halogen, Alkyl, Alkoxy, Aryl, Aryloxy, Aralkyl, Aralkoxy, Arylamino, Alkylthio, Arylthio, Alkylamino, Cyan, Thiocyan, Hydroxy, Acyl oder Acylamino substituiert sein können.

Eine bevorzugte Herstellungsweise ist dadurch gekennzeichnet, dass man einen Farbstoff der Formel (20), worin F die oben angegebene Bedeutung hat, mit mindestens einen Aequivalent einer Verbindung der Formel

$$HO-\underset{\displaystyle R_3}{\underset{|}{CH}}-\underset{\displaystyle R_2}{\underset{|}{N}}-\underset{\displaystyle O}{\underset{\|}{C}}-A-X \qquad (24)$$

worin $R_2$, $R_3$, A und X die unter Formel (21) und (22) angegebenen Bedeutungen haben, kondensiert und das Reaktionsprodukt anschliessend mit mindestens einem Aequivalent einer Verbindung der Formel (23), worin Q′ die unter Formel (23) angegebene Bedeutung hat, umsetzt.

Nach der Kondensation des Farbstoffes der Formel (20) mit einer Verbindung der Formel (24) kann der Rest X, falls X ein von Halogen verschiedener Rest ist, durch Anionenaustausch nach an sich bekannten Methoden in die entsprechende Halogenverbindung überführt werden.

Vorzugsweise verwendet man als quaternisierbaren basischen Rest Q′ der Formel (23) eine Verbindung der Formel

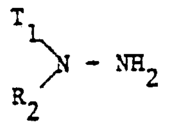 (25) , 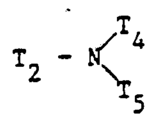 (26)

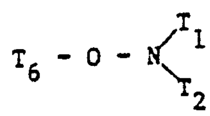 (27) oder 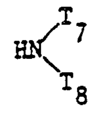 (28)

worin in den Formeln (25) bis (28) $T_1$, $T_2$, $T_3$, $T_4$ und $T_8$ unabhängig voneinander ein gegebenenfalls durch Hydroxy substituierter $C_{1-4}$-Alkylrest, $T_5$ und $T_6$ unabhängig voneinander ein $C_{1-4}$-Alkylrest, $T_7$ Wasserstoff, ein gegebenenfalls durch Hydroxy substituierter $C_{1-4}$-Alkylrest, ein gegebenenfalls durch 1 bis 3 Methylgruppen substituierter Cyclohexylrest oder ein Phenylrest ist, oder worin die Reste $T_1$ und $T_2$, $T_3$ und $T_4$ oder $T_7$ und $T_8$ zusammen mit dem Stickstoffatom einen Pyrrolidin-, Piperidin-, Morpholin- oder Piperazinring bilden oder worin die Reste $T_3$, $T_4$ und $T_5$ zusammen mit dem Stickstoffatom einen Pyrindinring oder einen Rest der Formel

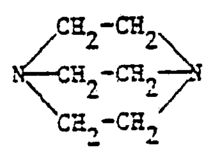 (29)

bilden.

Eine besonders bevorzugte Herstellungsweise ist dadurch gekennzeichnet, dass man einen Farbstoff der Formel (20), worin F die oben angegebene Bedeutung hat, mit mindestens einem Aequivalent einer Verbindung der Formel (24), worin $R_2$ Wasserstoff oder ein gegebenenfalls durch Chlor substituierter $C_{1-4}$-Alkylrest, $R_3$ Wasserstoff, ein gegebenenfalls durch Chlor substituierter $C_{1-4}$-Alkylrest oder ein gegebenenfalls substituierter Phenylrest ist, und A und X die unter Formel (22) angegebenen Bedeutungen haben, kondensiert und das Reaktionsprodukt anschliessend mit mindestens einem Aequivalent einer Verbindung der Formel (25), (26), (27), (28) oder (29) umsetzt.

Eine vor allem bevorzugte Herstellungsweise ist dadurch gekennzeichnet, dass man einen Farbstoff der Formel (20), worin F ein Dibenzanthron-, Isodibenzanthron-, 16,17-Aethylendioxydibenzanthron-, 2,2'-Dibenzanthronyl-, 2,2'-Bisindolindigo-, 2,2'-Bisthionaphtenindigo-, cis- oder trans-Naphtoylenbenzimidazol-, Benzothioxanthen-, N,N'-Di-p-tolyl-perylentetracarbonsäurediimid-, N,N'-Di-p-phenäthoxynaphthalin-1,4,5,8-tetracarbonsäurediimid-, 5,5'-Bisnaphthyl-1,1',8,8'-tetracarbonsäure-dibenzimidazol-, 5,5'-Bisnaphthyl-1,1',8,8'-tetracarbonsäure-6'',6'''-dimethyldibenzimidazol-, 5,5'-Bisnaphthyl-1,1',8,8'-tetracarbonsäure-5'',5''', 6'',6'''-tetramethoxydibenzimidazol- oder 16,17-Dihydroxy- oder Dimethoxy-dibenzanthronfarbstoffrest oder ein Rest der Formel

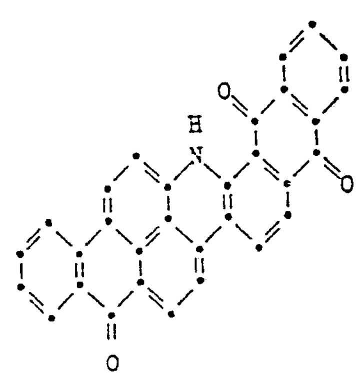 (8)

oder

(Siehe Figur Seite 10 f.)

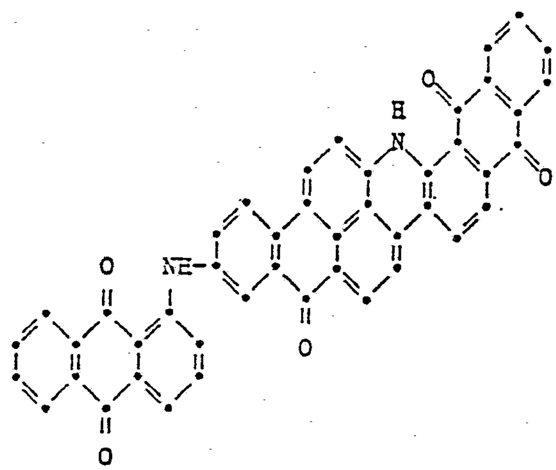

(9)

ist, mit mindestens einem Aequivalent einer Verbindung der Formel (24), worin $R_2$ und $R_3$ Wasserstoff, A Methylen und X Chlor ist, kondensiert, und das Reaktionsprodukt anschliessend mit mindestens einem Aequivalent einer Verbindung der Formel (23), worin Q' Pyridin ist, umsetzt.

Die Herstellung der bevorzugten Farbstoffe der Formeln (10), (11), (12), (13), (14), (15), (16) und (17) ist dadurch gekennzeichnet, dass man

a) Dibenzanthron mit N-Methylolchloracetamid kondensiert und das Reaktionsprodukt mit Pyridin zu einem Farbstoff der Formel (10) umsetzt ;

b) 16,17-Aethylendioxydibenzanthron mit N-Methylolchloracetamid kondensiert und das Reaktionsprodukt anschliessend mit Pyridin zu einem Farbstoff der Formel (11) umsetzt ;

c) trans-Naphtoylenbenzimidazol mit N-Methylolchloracetamid kondensiert und das Reaktionsprodukt anschliessend mit Pyridin zu einem Farbstoff der Formel (12) umsetzt ;

d) cis-Naphtoylenbenzimidazol mit N-Methylolchloracetamid kondensiert und das Reaktionsprodukt anschliessend mit Pyridin zu einem Farbstoff der Formel (13) umsetzt ;

e) N,N'-Di-p-tolyl-perylentetracarbonsäurediimid mit N-Methylolchloracetamid kondensiert und das Reaktionsprodukt anschliessend mit Pyridin zu einem Farbstoff der Formel (14) umsetzt ;

f) N,N'-Di-p-Phenäthoxynaphthalin-1,4,5,8-tetracarbonsäurediimid mit N-Methylolchloracetamid kondensiert und das Reaktionsprodukt anschliessend mit Pyridin zu einem Farbstoff der Formel (15) umsetzt ;

g) 5,5'-Bis-naphthyl-1,1',8,8'-tetracarbonsäure-dibenzimidazol mit N-Methylolchloracetamid kondensiert und das Reaktionsprodukt anschliessend mit Pyridin zu einem Farbstoff der Formel (16) umsetzt ;

h) 16,17-Dihydroxydibenzanthron mit N-Methylolchloracetamid kondensiert und das Reaktionsprodukt anschliessend mit Pyridin zu einem Farbstoff der Formel (17) umsetzt.

Ein weiteres bevorzugtes Verfahren zur Herstellung von Farbstoffen der Formel

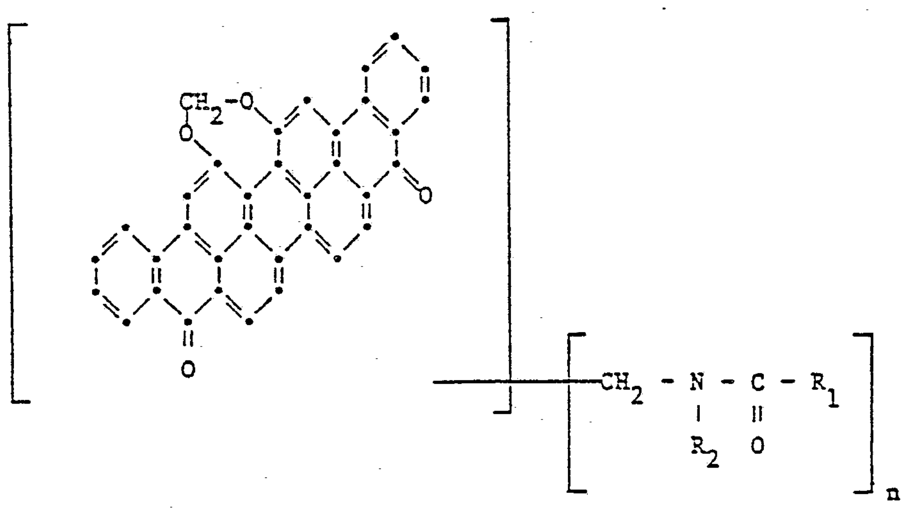

(30)

worin $R_1$, $R_2$ und n die unter Formel (1) angegebenen Bedeutungen haben, ist dadurch gekennzeichnet, dass man ein 16,17-Dihydroxy- oder Dialkoxydibenzanthron mit mindestens zwei Aequivalenten einer Verbindung der Formel (21), worin $R_3$ Wasserstoff ist und $R_1$ und $R_2$ die unter Formel (21) angegebenen

Bedeutungen haben, kondensiert, und falls $R_1$ ein Rest der Formel (22) ist, das Reaktionsprodukt anschliessend mit mindestens einem Aequivalent einer Verbindung der Formel (23) umsetzt.

Bei dieser bevorzugten Herstellungsweise wird das 16,17-Dihydroxy- oder Dialkoxydibenzanthron durch ein Aequivalent der Verbindung der Formel (21) amidomethyliert und mit dem zweiten Aequivalent der Verbindung der Formel (21) erfolgt die Substitution unter gleichzeitigem Ringschluss zu einem Farbstoff der Formel (30).

Die Herstellung der Farbstoffmischungen, die als Mischungskomponenten Farbstoffe der Formel (1), worin n in den einzelnen Komponenten unabhängig voneinander 1, 2, 3 oder 4 ist, und F, $R_1$, $R_2$ und $R_3$ in den einzelnen Komponenten gleich ist und gegebenenfalls eine Komponente der Formel (20) enthalten, worin der Rest F in den Formeln (1) und (20) gleich ist, ist dadurch gekennzeichnet, dass man einen Farbstoff der Formel (20), worin F die unter Formel (20) angegebene Bedeutung hat, mit einer Verbindung der Formel (21), worin $R_1$, $R_2$ und $R_3$ die unter Formel (21) angegebenen Bedeutungen haben, kondensiert und die Mischung der Reaktionsprodukte anschliessend mit einer Verbindung der Formel (23) umsetzt.

Die Kondensation eines Farbstoffes der Formel (20) mit einer Verbindung der Formel (21) ist eine Tscherniac-Einhorn-Kondensation, die in Gegenwart saurer Kondensationsmittel, wie beispielsweise konzentrierter Schwefelsäure, bei niedriger Temperatur ausgeführt wird.

Falls der Rest $R_1$ in Formel (21) ein Rest der Formel (22) ist, kann das Kondensationsprodukt mit einer basischen Verbindung, beispielsweise einem tertiären Amin weiterumgesetzt werden, wobei die Umsetzung bei niedriger bis leicht erhöhter Temperatur erfolgt.

Als Ausgangsverbindungen der Formel (20) seien beispielsweise genannt: Dibenzanthron, Isodibenzanthron, 16,17-Aethylendioxydibenzanthron, 16,17-Dihydroxydibenzanthron, 16,17-Dimethoxydibenzanthron, 2,2'-Dibenzanthronyl, 2,2'-Bisindolindigo, 2,2'-Bisthionaphtenindigo, cis-Naphthoylenbenzimidazol, trans-Naphtoylenbenzimidazol, Benzothioxanthen, N,N'-Di-p-tolylperylentetracarbonsäurediimid, N,N'-Di-p-phenäthoxynaphthalin-1,4,5,8-tetracarbonsäurediimid, 5,5'-Bis-naphthyl-1,1',8,8'-tetracarbonsäure-dibenzimidazol, 5,5'-Bis-naphthyl-1,1',8,8'-tetracarbonsäure-6",6'''-dimethyldibenzimidazol, 5,5'-Bis-naphthyl-1,1',8,8'-tetracarbonsäure-5",5''',6",6'''-tetramethoxydibenzimidazol und Verbindungen der Formeln

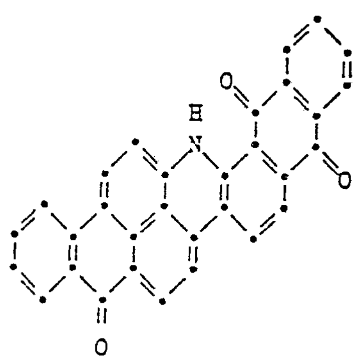

(8)

oder

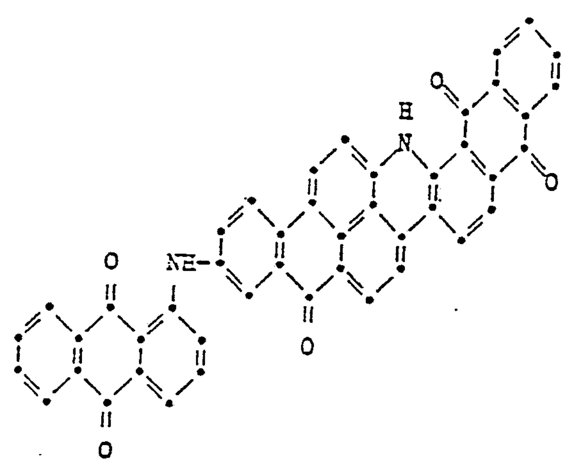

(9)

Als Ausgangsverbindungen der Formel (21) seien beispielsweise genannt: N-Methylolacetamid, N-Methylolchloracetamid, N-Methyl-N-methylolacetamid, N-(α-Hydroxypropyl)-propionamid, N-(β-Chlor-α-hydroxyäthyl)-acetamid, N-Methylolphthalimid, N-Methyloldichlorbenzamid, N-Methylolbenzamid, N-Methylolcyclohexamid, N-Methyl-3-chlorpropionamid, N-Phenyl-N-methylolchloracetamid.

Als Ausgangsverbindungen der Formel (23) seien beispielsweise genannt : N,N-Dimethylhydrazin, Triäthylamin, Dibutylamin, N-Propyl-N-cyclohexylamin, Pyrrolidin, Piperidin, Morpholin, Piperazin, Pyridin und Triäthylendiamin.

Die erfindungsgemäss erhaltenen Farbstoffe der Formel (1) können auf an sich bekannte Weise aus der Reaktionsmischung abgetrennt werden.

Verwendung finden die neuen basischen, gegebenenfalls quaternierten Verbindungen der Formel (1) unter Einschluss der Verbindung der Formel

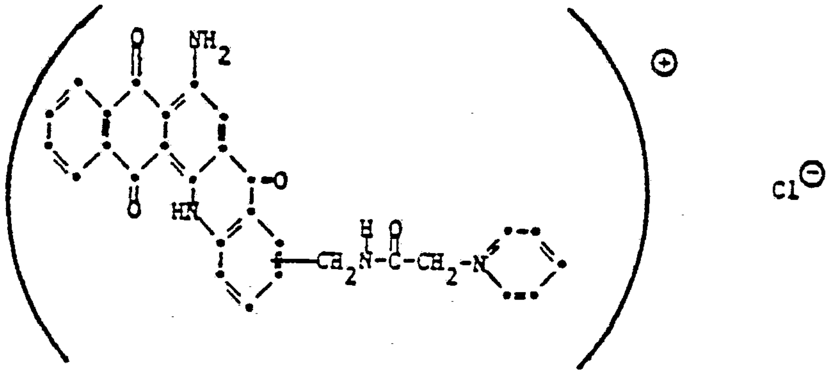

Als Farbstoffe zum Färben und/oder Bedrucken von textilen Cellulosematerialien und Papier.

Dienen die neuen Farbstoffe zum Färben und/oder Bedrucken von Cellulosematerialien so kommen als solche natürliche und regenerierte Cellulosematerialien wie Baumwolle und Viscose, wobei man Ausfärbungen erhält, die durch einen guten Aufbau des Farbstoffes gekennzeichnet sind. Die erhaltenen Färbungen weisen gute Echtheiten, vor allem Nassechtheiten wie Waschechtheiten und Lichtechtheiten auf. Darüberhinaus ist es von Vorteil, dass die erfindungsgemässen Verbindungen der Formel (1) ohne Vorbehandlung der Cellulosematerialien und ohne zusätzliche Salzzugabe in die Färbeflotte auf diese Materialien aufziehen.

Eine bevorzugte Verwendung der erfindungsgemässen Verbindungen der Formel (1) liegt in der Anwendung zum Färben von Papier aller Arten, vor allem von gebleichtem, ungeleimtem und geleimten ligninfreiem Papier. Ganz besonders geeignet sind diese Verbindungen zum Färben von ungeleimten Papier (Tissues) als Folge ihrer sehr hohen Standard-Affinität zu diesem Substrat.

Die erfindungsgemässen Verbindungen ziehen sehr gut auf diese Substrate, wobei die Abwasser — auch bei tiefen Nuancen (bis über 1/1 RT = Richttyptiefe) — farblos bleiben, was ein eminenter technischer und ökologischer Vorteil, insbesondere im Hinblick auf die heutigen Abwasser-Gesetze ist. Der gute Ausziehgrad ist auch für eine gute Reproduzierbarkeit der Nuance von Vorteil. Der Ausziehgrad wird praktisch nicht von der Wasserhärte beeinflusst. Die Papier-Färbungen sind lichtecht und nassecht, d. h. sie zeigen keine Neigung zum Ausbluten, wenn gefärbtes Papier in nassem Zustand mit feuchtem weissem Papier in Berührung gebracht wird. Diese Eigenschaft ist besonders für sogenannte « Tissues » erwünscht, bei denen vorhersehbar ist, dass das gefärbte Papier in nassem Zustand (z. B. getränkt mit Wasser, Alkohol, Tensid-Lösung etc.) in Berührung mit anderen Flächen wie Textilien, Papier und dergleichen kommt, die gegen Verschmutzung geschützt werden müssen.

Die hohe Affinität für Papier und die grosse Ausziehgeschwindigkeit der erfindungsgemässen Farbstoffe ist für das Kontinue-Färben von Papier von grossem Vorteil, und ermöglicht somit einen sehr breiten Einsatz.

Gegenüber den aus der DE-A-1 644 534 bekannten Farbstoffen, welche ausschliesslich zum Färben von Polyacrylnitrilfasern verwendet werden, werden die anmeldungsgemässen Farbstoffe zum Färben von Cellulose- und vor allem Papiermaterialien angewandt ; eine derartige Applikationsmöglichkeit war aus dieser DE-A nicht ableitbar.

In den nachfolgenden Beispielen bedeuten die Teile, sofern nichts anderes angegeben ist, Gewichtsteile, die Prozente Gewichtsprozente, und die Temperaturen sind in Celsiusgraden angegeben. Gewichtsteile stehen zu Volumenteilen wie Gramm zu Milliliter.

Beispiel 1

Eine Mischung von 46 Teilen der Farbbase der Formel

(Siehe Figur Seite 13 f.)

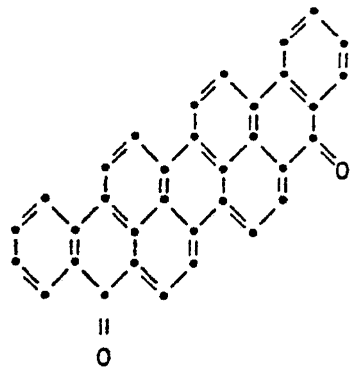

und 30 Teile N-Methylolchloracetamid werden in 500 Teilen 100 %iger Schwefelsäure gelöst. Das Gemisch wird dann während 15 Stunden bei 50° gerührt. Anschliessend giesst man die Lösung auf Eis, wobei das Reaktionsprodukt ausfällt, filtriert ab und wäscht mit Wasser neutral. Nach der Trocknung erhält man 50 Teile der Formel

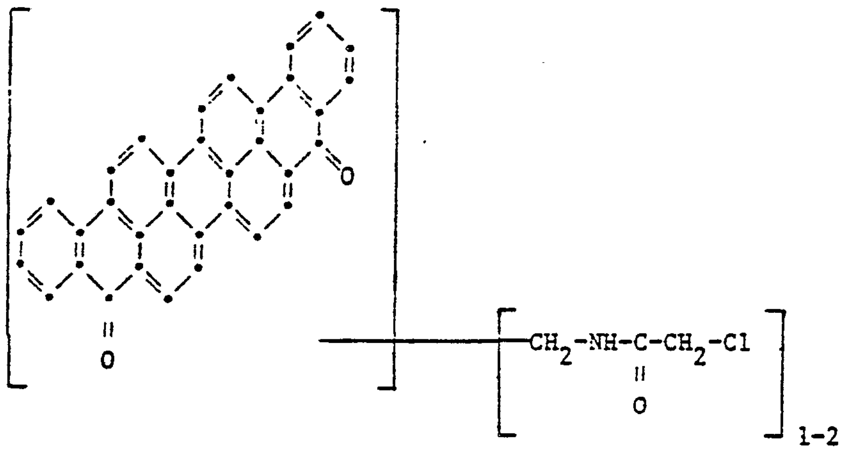

30 Teile des so erhaltenen Kondensationsproduktes werden in 200 Teile Pyridin eingetragen und 1 Stunde auf 100° erwärmt.

Die kationische Verbindung der Formel

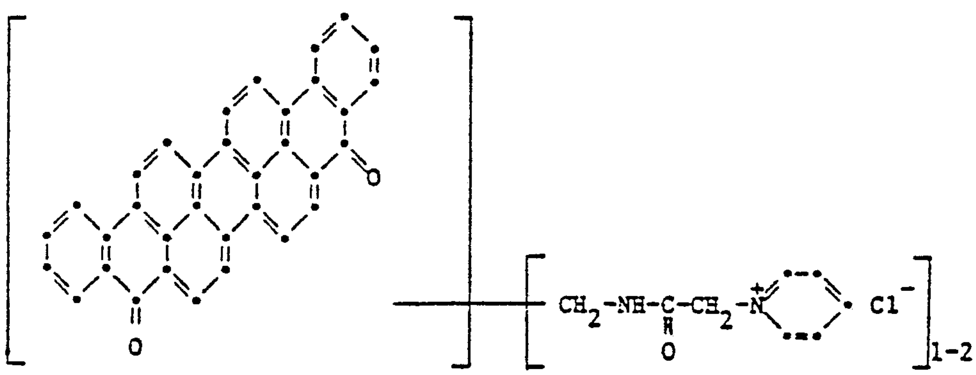

wird abgesaugt und getrocknet.

Der Farbstoff zeigt auf Papier und Baumwolle ein sehr gutes Ausziehvermögen. Die rotstichig blauen Färbungen besitzen sehr hohe Nassechtheiten und eine gute Lichtechtheit.

Verwendet man anstelle von Dibenzanthron als Farbbase entsprechende Teile der in der Tabelle 1 aufgeführten Farbbasen, so erhält man Farbstoffe mit ähnlich guten Eigenschaften.

(Siehe Tabelle 1 Seite 14 ff.)

Tabelle 1

| Beispiel | Teile | Farbbase | Farbton auf Papier |
|---|---|---|---|
| 2 | 52 | 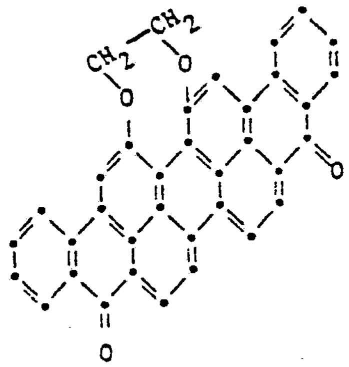 | grünstichig blau |
| 3 | 46 | 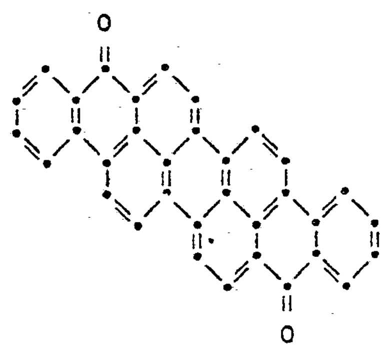 | rotstichig blau |
| 4 | 45 | 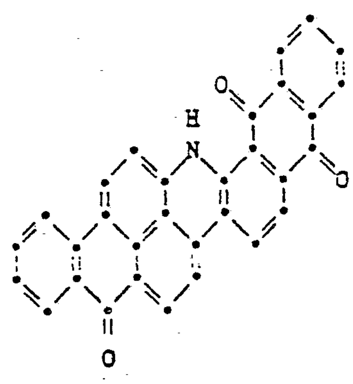 | olive |

Tabelle 1 (Fortsetzung)

| Bei-spiel | Teile | Farbbase | Farbton auf Papier |
|---|---|---|---|
| 5 | 67 | 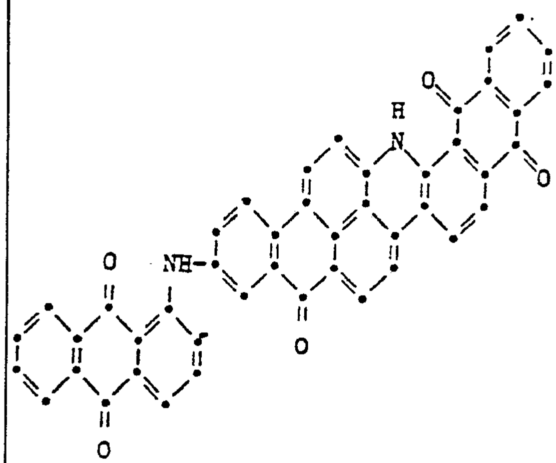 | olive |
| 6 | 46 | 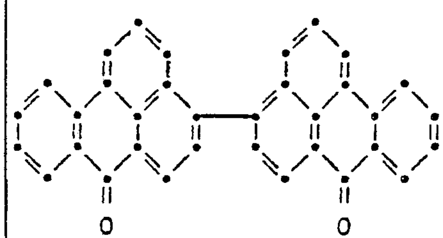 | gelbstichig grün |
| 7 | 26 | 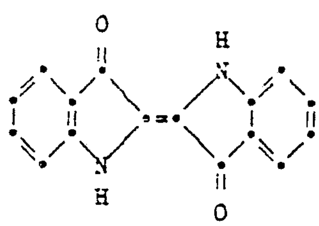 | grünstichig blau |
| 8 | 30 | 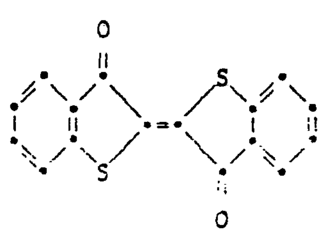 | blaustichig rot |

Tabelle 1 (Fortsetzung)

| Beispiel | Teile | Farbbase | Farbton auf Papier |
|---|---|---|---|
| 9 | 41 | 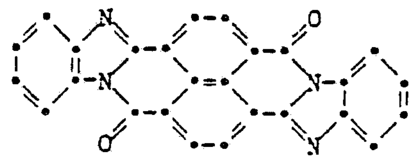 | orange |
| 10 | 41 | 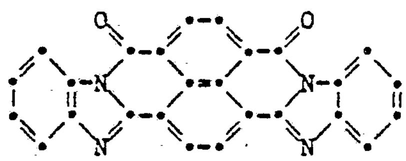 | rot |
| 11 | 49 | 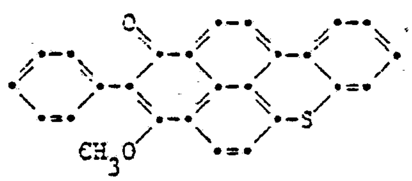 | rot |
| 12 | 57 | 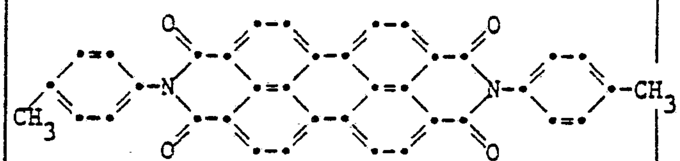 | rot |
| 13 | 63 | 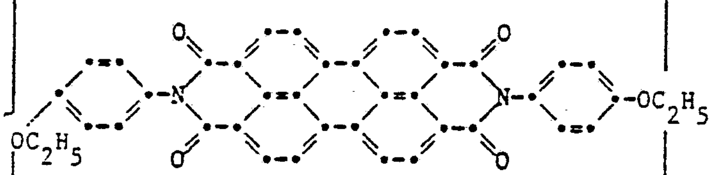 | rot |

Tabelle 1 (Fortsetzung)

| Beispiel | Teile | Farbbase | Farbton auf Papier |
|---|---|---|---|
| 14 | 54 | 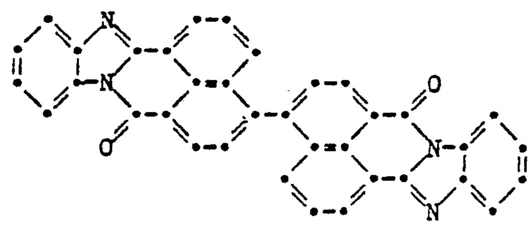 | gelb |
| 15 | 56 | 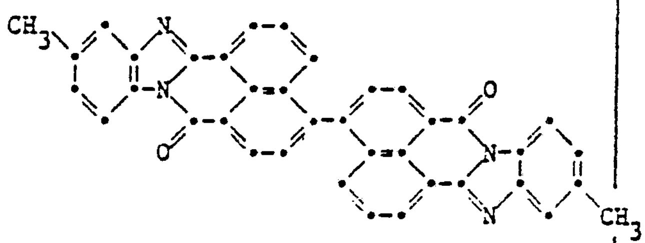 | gelb |
| 16 | 76 | 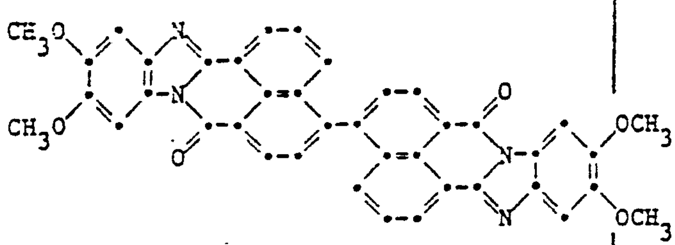 | orange |

Beispiel 17

49 Teile der Farbbase der Formel

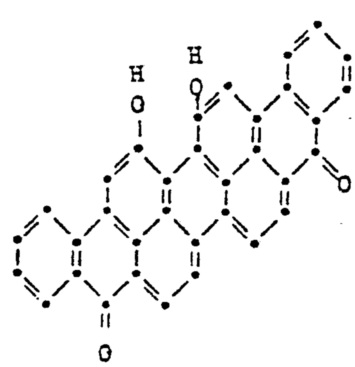

werden mit 30 Teilen N-Methylolchloracetamid vermischt und in 500 Teile 100 %ige Schwefelsäure eingetragen. Das Gemisch wird während 15 Stunden bei 50° gerührt und anschliessend auf Eis gegossen. Das ausgefallene Produkt der Formel

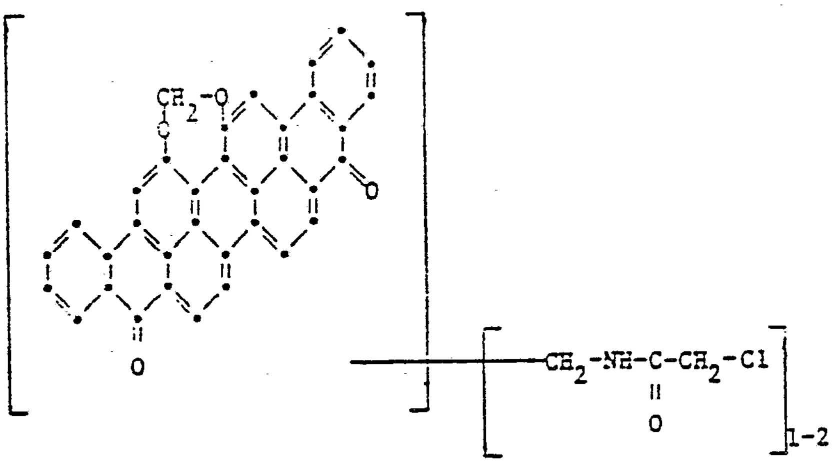

wird abfiltriert, neutral-gewaschen und getrocknet. Die Quaternisierung mit Pyridin erfolgt wie im Beispiel 1 beschrieben, wobei man den kationischen Farbstoff der Formel

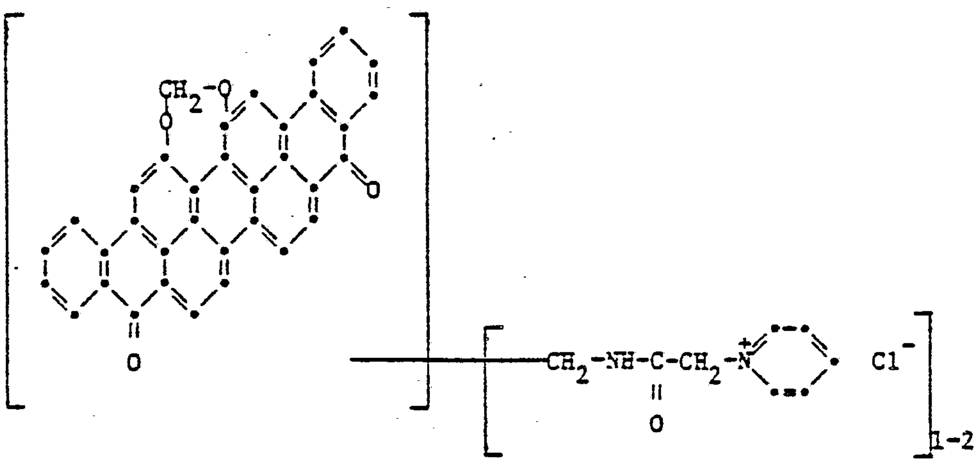

erhält, der auf Papier oder Baumwolle gefärbt eine rotstichig blaue Nuance von guten Licht- und Nassechtheiten ergibt.

Verwendet man anstelle von 16,17-Dihydroxydibenzanthron als Farbbase unter gleichen Bedingungen 52 Teile der Farbbase der Formel

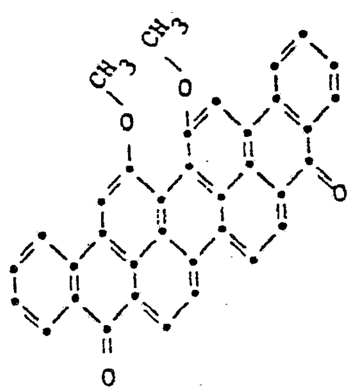

so erhält man die kationische Verbindung der Formel

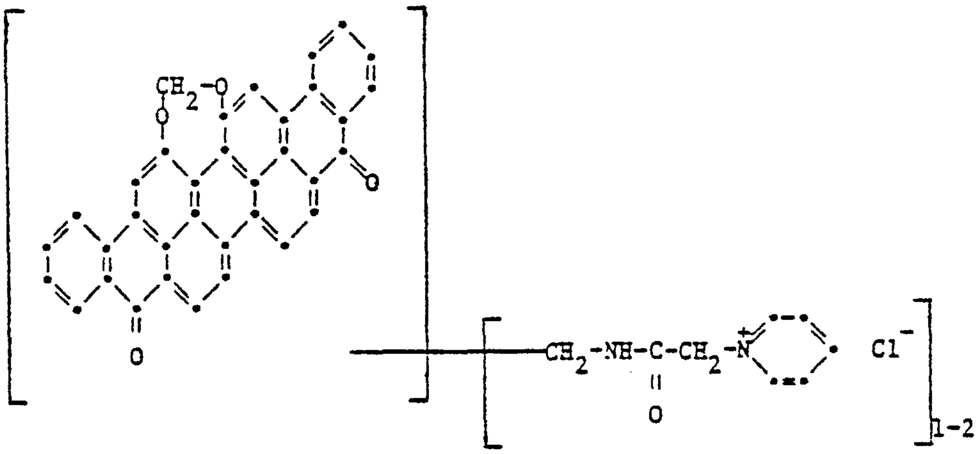

die auf Papier wie auf Baumwolle gleichgute Eigenschaften zeigt.

## Applikationsbeispiel

5 Teile Papier (ungeleimt, 50 % Sulfit RKN 15 gebleicht und 50 % Buche Sulfit gebleicht, Mahlgrad 21°, Schopper-Riegler) werden in einem Becher aus restfreiem Stahl in 200 Teilen Wasser (Wasserhärte 10° dH, pH 6 = aufgeschlämmt. Man setzt 0,1 Teil des kationischen Farbstoffes gemäss Beispiel 2 zu. Nach 20-minütigem Rühren bei 22° setzt man weitere 1 800 Teile Wasser zu Anschliessend wird ein Blatt Papier in einem « Frank » Blattbildner hergestellt, das tiefblau gefärbt ist und eine gute Lichtechtheit aufweist. Das gefärbte Blatt Papier ist auslaugebeständig gegen Wasser, Wasser/Alkohol (50 : 50), und Tensid-Lösungen, wobei das Abwasser farblos ist.

**Patentansprüche**

1. Verwendung von Farbstoffen der Formel

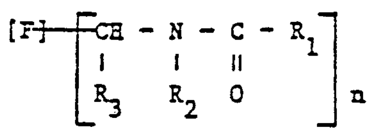 (1),

worin F der Rest eines indigoiden Farbstoffes, eines Benzothioxanthens oder eines mindestens 4 alicyclische und/oder heterocyclische kondensierte Sechsringe und mindestens zwei Ringketogruppen enthaltenden nicht wasserlöslichen, aromatischen Farbstoffes ist, $R_1$ ein Rest der Formel

—A—Q (2)

worin A ein gegebenenfalls substituierter $C_{1-4}$-Alkylenrest und Q ein gegebenenfalls quaternisierter basischer Rest ist, $R_2$ Wasserstoff oder ein gegebenenfalls substituierter $C_{1-4}$-Alkylrest ist, und $R_3$ Wasserstoff, ein gegebenenfalls substituierter $C_{1-4}$-Alkylrest, ein gegebenenfalls substituierter Arylrest, ein $C_{1-4}$-Alkoxycarbonylrest oder ein N,N-Di-$C_{1-4}$-Alkylcarboxamidrest und n 1, 2, 3 oder 4 ist, zum Färben von textilen Cellulosematerialien und Papier.

2. Farbstoffe der Formel

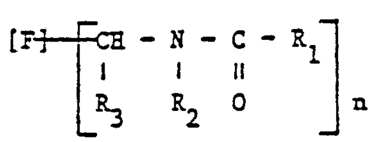 (1),

worin F der Rest eines indigoiden Farbstoffes, eines Benzothioxanthens oder eines mindestens 4 alicyclische und/oder heterocyclische kondensierte Sechsringe und mindestens zwei Ringketogruppen enthaltenden nicht wasserlöslichen, aromatischen Farbstoffes ist, $R_1$ ein Rest der Formel

—A—Q (2)

worin A ein gegebenenfalls substituierter $C_{1-4}$-Alkylenrest und Q ein gegebenenfalls quaternisierter basischer Rest ist, $R_2$ Wasserstoff oder ein gegebenenfalls substituierter $C_{1-4}$-Alkylrest ist, und $R_3$ Wasserstoff, ein gegebenenfalls substituierter $C_{1-4}$-Alkylrest, ein gegebenenfalls substituierter Arylrest, ein $C_{1-4}$-Alkoxycarbonylrest oder ein N,N-Di-$C_{1-4}$-Alkylcarboxamidrest und n 1, 2, 3 oder 4 ist, mit Ausnahme des Farbstoffes der Formel

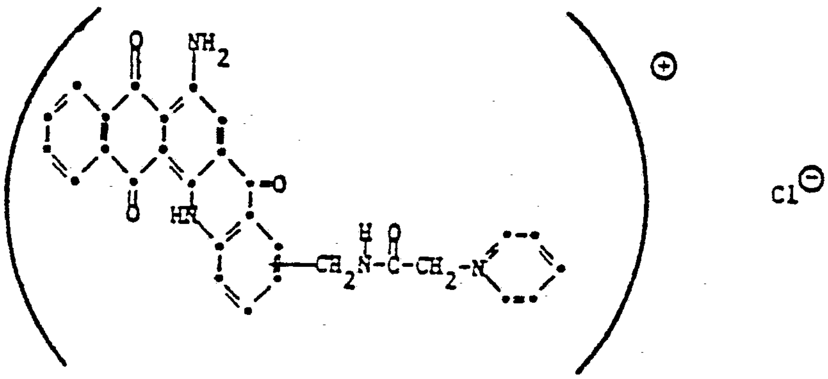

3. Farbstoffe gemäss Anspruch 2, worin F der Rest eines verküpbaren Indanthron-, Flavanthron-, Anthrachinonacridon-, Anthrachinonthioxanthon-, Thiophenbenzanthron-, Anthrachinoncarbazol-, Pyranthron-, Anthanthron-, Dibenzpyrenchinon-, Isodipenzpyrenchinon-, Dibenzanthron-, Isodibenzanthron-, Perylentetracarbonsäureimid-, Naphtoylenbenzimidazol- oder Naphtochinonfarbstoffes, ein indigoider Farbstoffrest oder ein Perinon- oder Benzothioxanthenfarbstoffrest ist, wobei die Farbstoffreste gegebenenfalls durch Halogen, Alkyl, Alkoxy, Aryl, Aryloxy, Aralkyl, Aralkoxy, Arylamino, Alkylthio-Arylthio, Alkylamino, Cyan, Thiocyan, Hydroxy, Acyl oder Acylamino substituiert sein können, und $R_1$, $R_2$, $R_3$ und n die in Anspruch 2 angegebenen Bedeutungen haben.

4. Farbstoffe gemäss Anspruch 2, worin Q in Formel (2) ein Rest der Formel

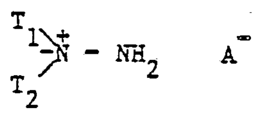 (3) , 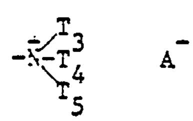 (4)

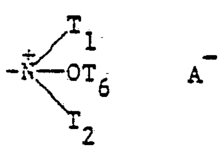 (5) oder 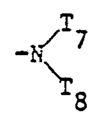 (6)

ist, worin in den Formeln (3) bis (6) $T_1$, $T_2$, $T_3$, $T_4$ und $T_8$ unabhängig voneinander ein gegebenenfalls durch Hydroxy substituierter $C_{1-4}$-Alkylrest, $T_5$ und $T_6$ unabhängig voneinander ein $C_{1-4}$-Alkylrest, $T_7$ Wasserstoff, ein gegebenenfalls durch Hydroxy substituierter $C_{1-4}$-Alkylrest, ein gegebenenfalls durch 1 bis 3 Methylgruppen substituierter Cyclohexylrest oder ein Phenylrest ist, oder worin die Reste $T_1$ und $T_2$, $T_3$ und $T_4$ oder $T_7$ und $T_8$ zusammen mit dem Stickstoffatom einen Pyrrolidin-, Piperidin-, Morpholin- oder Piperazinring bilden oder worin die Reste $T_3$, $T_4$ und $T_5$ zusammen mit dem Stickstoffatom einen Pyridiniumring oder einen Rest der Formel

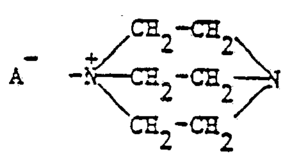 (7)

bilden und $A^-$ in den Formeln (3) bis (5) und (7) ein organisches oder anorganisches Anion ist und F, $R_2$, $R_3$, A und n die in Anspruch 2 angegebenen Bedeutungen haben.

5. Farbstoffe gemäss Anspruch 4, worin $R_2$ Wasserstoff oder ein gegebenenfalls durch Chlor substituierter $C_{1-4}$-Alkylrest, $R_3$ Wasserstoff, ein gegebenenfalls durch Chlor substituierter $C_{1-4}$-Alkylrest oder ein gegebenenfalls substituierter Phenylrest ist, und F, A, $A^-$, Q und n die angegebene Bedeutung haben.

6. Farbstoffe gemäss Anspruch 5, worin F ein Dibenzanthron-, Isodibenzanthron-, 16, 17-Aethylendioxydibenzanthron-, 2,2'-Dibenzanthronyl-, 2,2'-Bisindolindigo-, 2,2'-Bisthionaphtenindigo-, cis- oder trans-Napthoylenbenzimidazol-, Benzothioxanthen-, N,N'-Di-p-tolyl-perylentetracarbonsäurediimid-, N,N'-Di-p-phenäthoxynaphthalin-1,4,5,8-tetracarbonsäurediimid-, 5,5'-Bisnaphthyl-1,1',8,8'-tetracarbonsäure-dibenzimidazol-, 5,5'-Bisnaphthyl-1,1'-8,8'-tetracarbonsäure-6",6'''-dimethyldibenzimidazol-, 5,5'-Bisnaphthyl-1,1',8,8'-tetracarbonsäure-5",5'''-6",6'''-tetramethoxydibenzimidazol- oder 16,17-Methylendioxydibenzanthronfarbstoffrest oder einen Rest der Formel

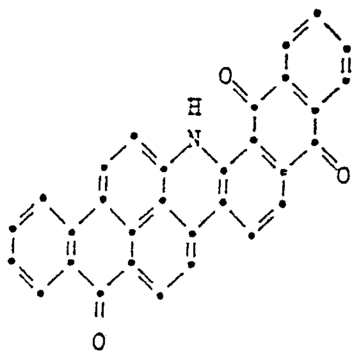

(8)

oder

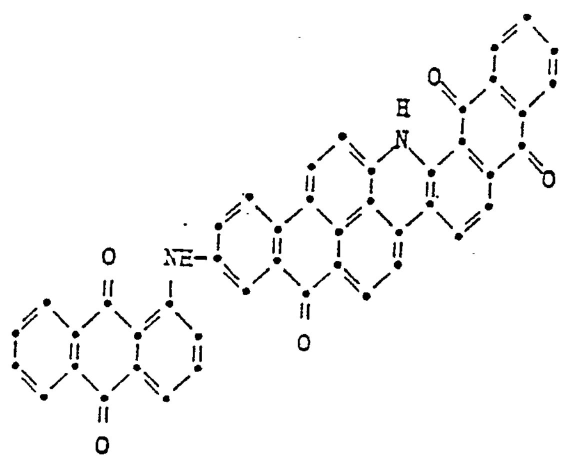

(9)

ist, $R_2$ und $R_3$ Wasserstoff, A ein Methylenrest, Q ein Pyridiniumrest $A^-$ ein Chloridion und n 1 oder 2 ist.

7. Der Farbstoff gemäss Anspruch 6, der Formel

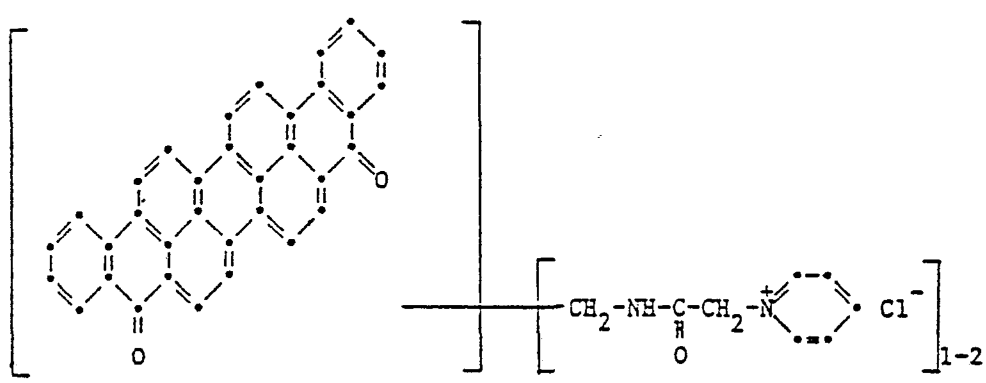

(10).

8. Der Farbstoff gemäss Anspruch 6, der Formel

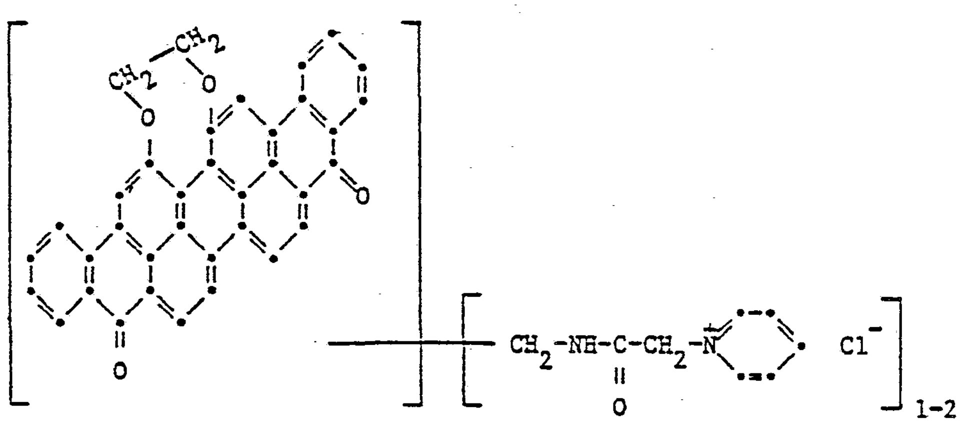

(11).

9. Der Farbstoff gemäss Anspruch 6, der Formel

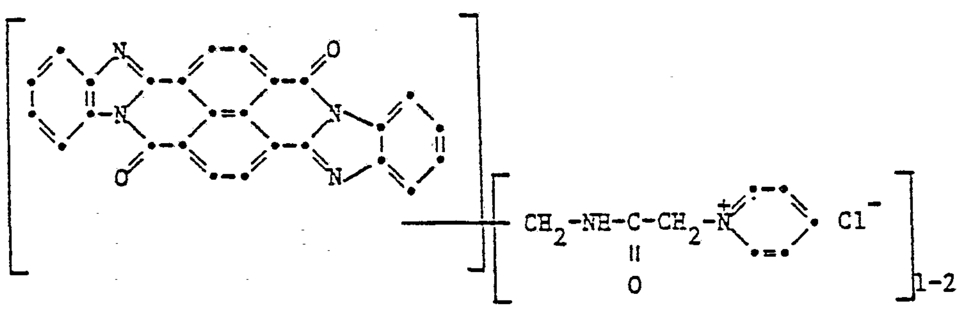

(12).

10. Der Farbstoff gemäss Anspruch 6, der Formel

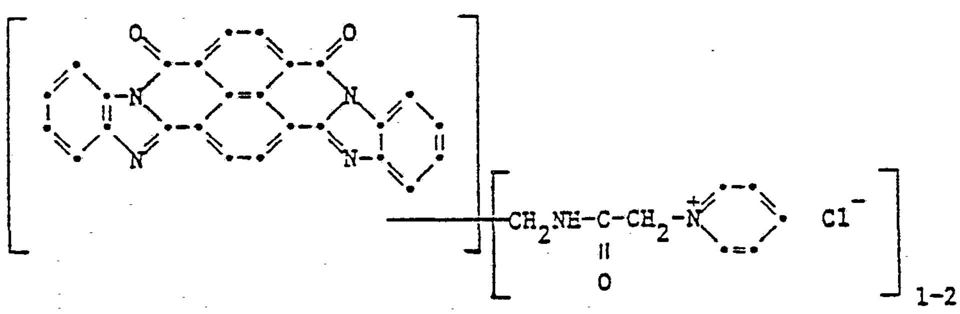

(13).

11. Der Farbstoff gemäss Anspruch 6, der Formel

(Siehe Figur Seite 23 f.)

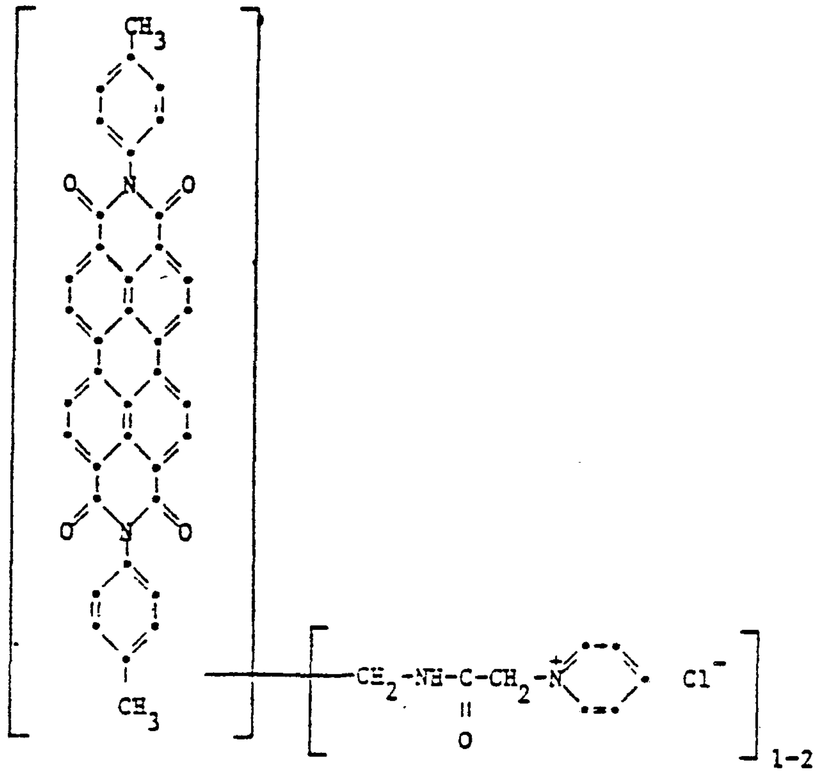

(14).

12. Der Farbstoff gemäss Anspruch 6, der Formel

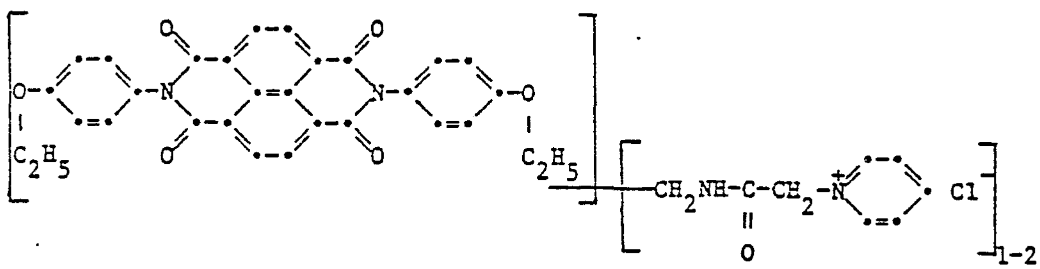

(15).

13. Der Farbstoff gemäss Anspruch 6, der Formel

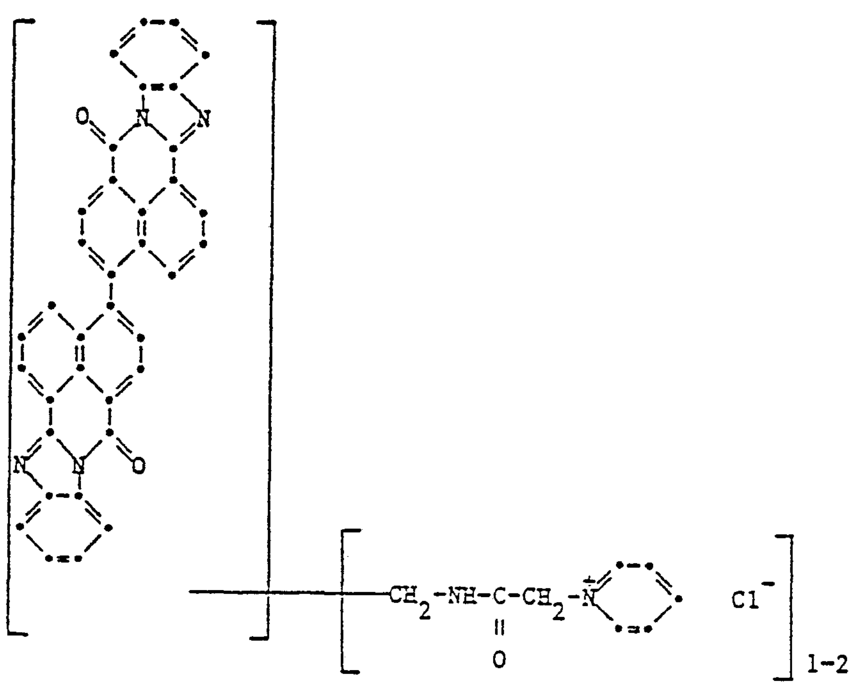

(16).

14. Der Farbstoff gemäss Anspruch 6, der Formel

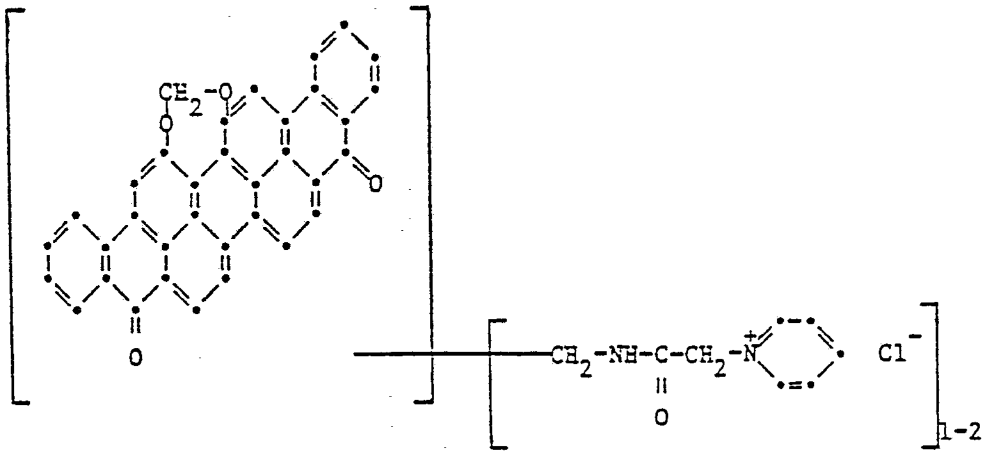

(17).

15. Farbstoffe gemäss Anspruch 2 der Formel

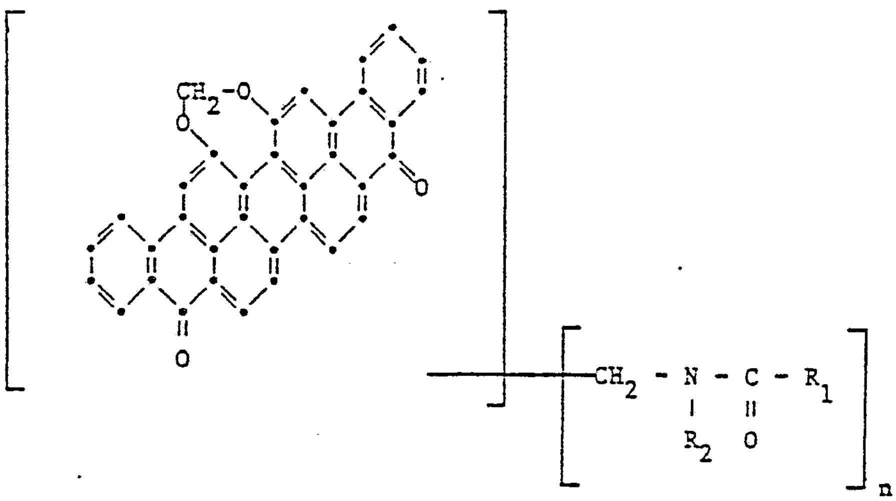

(30)

worin $R_1$, $R_2$ und n die in Anspruch 2 angegebenen Bedeutungen haben.

16. Farbstoffmischungen, die als Mischungskomponenten Farbstoffe der Formel

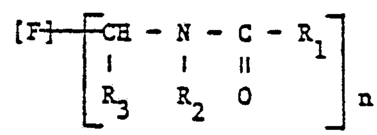

(1),

worin n in den einzelnen Komponenten unabhängig voneinander 1, 2, 3 oder 4 is und F, $R_1$, $R_2$ und $R_3$ in den einzelnen Komponenten gleich ist und gegebenenfalls eine Komponente der Formel

F—H (20)

enthalten, worin der Rest F in den Formeln (1) und (20) gleich ist und F der Rest eines indigoiden Farbstoffes, eines Benzothioxanthens oder eines mindestens 4 alicyclische und/oder heterocyclische kondensierte Sechsringe und mindestens zwei Ringketogruppen enthaltenden nicht wasserlöslichen, aromatischen Farbstoffes ist, und worin in Formel (1) $R_1$ ein Rest der Formel

—A—Q (2)

ist, worin A ein gegebenenfalls substituierter $C_{1-4}$-Alkylenrest und Q ein gegebenenfalls quaternisierter basischer Rest ist, $R_2$ Wasserstoff oder ein gegebenenfalls substituierter $C_{1-4}$-Alkylrest ist und $R_3$ Wasserstoff, ein gegebenenfalls substituierter $C_{1-4}$-Alkylrest, ein gegebenenfalls substituierter Arylrest, ein $C_{1-4}$-Alkoxycarbonylrest oder ein N,N-Di-$C_{1-4}$-Alkylcarboxamidrest ist.

17. Verfahren zur Herstellung von Farbstoffen der Formel (1)

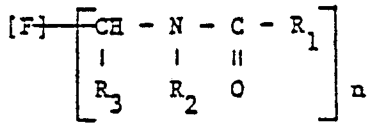

(1),

gemäss Anspruch 2 worin F der Rest eines indigoiden Farbstoffes, eines Benzothioxanthens oder eines mindestens 4 alicyclische und/oder heterocyclische kondensierte Sechsringe und mindestens zwei Ringketogruppen enthaltenden, nicht wasserlöslichen, aromatischen Farbstoffes ist, $R_1$ ein Rest der Formel

—A—Q (2),

worin A ein gegebenenfalls substituierter $C_{1-4}$-Alkylenrest und Q ein gegebenenfalls quaternisierter basischer Rest ist, $R_2$ Wasserstoff oder ein gegebenenfalls substituierter $C_{1-4}$-Alkylrest ist, und $R_3$ Wasserstoff, ein gegebenenfalls substituierter $C_{1-4}$-Alkylrest, ein gegebenenfalls substituierter Arylrest, ein $C_{1-4}$-Alkoxycarbonylrest oder ein N,N-Di-$C_{1-4}$-Alkylcarboxamidrest und n 1, 2, 3 oder 4 ist, mit Ausnahme des Farbstoffes der Formel

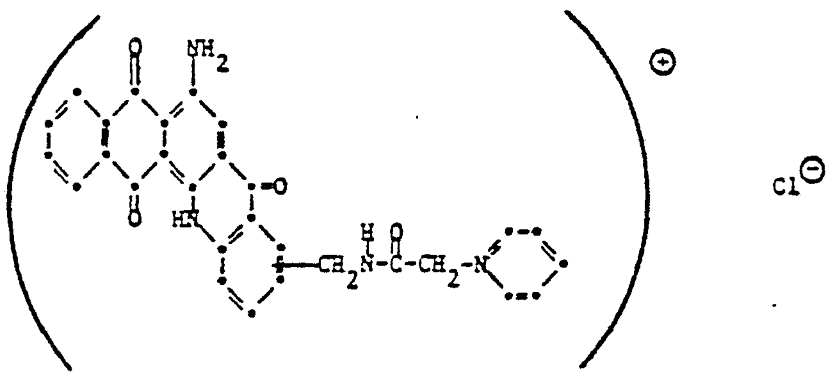

dadurch gekennzeichnet, dass man einen Farbstoff der Formel

F—H, (20)

worin F die unter Formel (1) angegebene Bedeutung hat, mit mindestens einem Aequivalent einer Verbindung der Formel

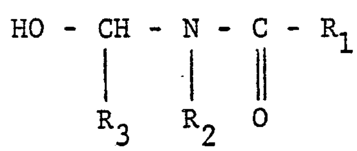

(21),

worin $R_1$ ein Rest der Formel

—A—X (22)

ist, worin A ein gegebenenfalls substituierter $C_{1-4}$-Alkylenrest und X ein in ein Anion überführbarer Rest ist, $R_2$ und $R_3$ die unter Formel (1) angegebenen Bedeutungen haben, kondensiert, und das Reaktionsprodukt anschliessend mit mindestens einem Aequivalent einer Verbindung der Formel

Q′ (23),

worin Q′ ein quaternisierbarer basischer Rest ist, zu einem Farbstoff der Formel (1) umsetzt.

18. Verfahren zur Herstellung von Farbstoffmischungen, gemäss Anspruch 16, die als Mischungskomponenten Farbstoffe der Formel

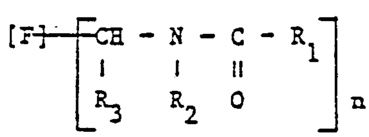

(1),

worin n in den einzelnen Komponenten unabhängig voneinander 1, 2, 3 oder 4 ist und F, $R_1$, $R_2$ und $R_3$ in den einzelnen Komponenten gleich ist und gegebenenfalls eine Komponente der Formel

$$F{-}H \qquad (20)$$

enthalten, worin der Rest F in den Formeln (1) und (20) gleich ist und F der Rest eines indigoiden Farbstoffes, eines Benzothioxanthens oder eines mindestens 4 alicyclische und/oder heterocyclische kondensierte Sechsringe und mindestens zwei Ringketogruppen enthaltenden nicht wasserlöslichen, aromatischen Farbstoffes ist, und worin in Formel (1) $R_1$ ein Rest der Formel

$$-A{-}Q \qquad (2)$$

ist, worin A ein gegebenenfalls substituierter $C_{1-4}$-Alkylenrest, Q ein gegebenenfalls quaternisierter basischer Rest ist, $R_2$ Wasserstoff oder ein gegebenenfalls substituierter $C_{1-4}$-Alkylrest ist, und $R_3$ Wasserstoff, ein gegebenenfalls substituierter $C_{1-4}$-Alkylrest, ein gegebenenfalls substituierter Arylrest, ein $C_{1-4}$-Alkoxycarbonylrest oder ein N,N-Di-$C_{1-4}$-Alkylcarboxamidrest ist, mit Ausnahme des Farbstoffes der Formel

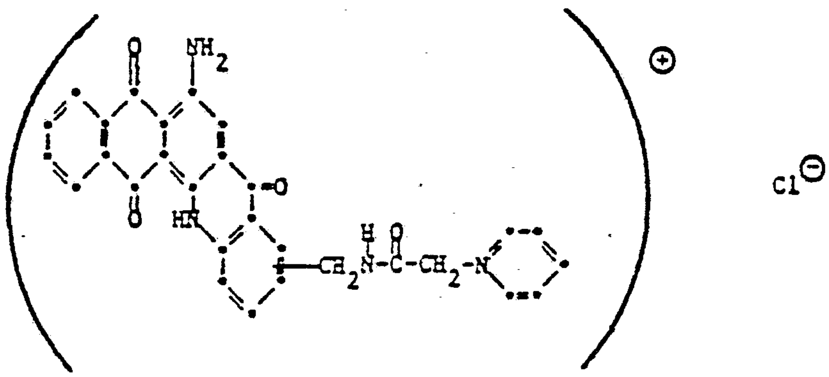

dadurch gekennzeichnet, dass man einen Farbstoff der Formel (20), worin F die unter Formel (20) angegebene Bedeutung hat, mit einer Verbindung der Formel

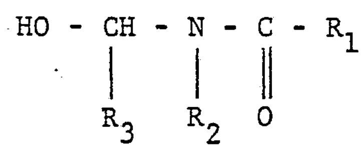

(21),

worin $R_1$ ein Rest der Formel

$$-A{-}X \qquad (22)$$

ist, worin A ein gegebenenfalls substituiert $C_{1-4}$-Alkylenrest und X ein in ein Anion überführbarer Rest ist, $R_2$ und $R_3$ die unter Formel (1) angegebene Bedeutung haben, kondensiert und die Mischung der Reaktionsprodukte anschliessend mit einer Verbindung der Formel

$$Q' \qquad (23)$$

worin Q' ein gegebenenfalls quaterniserbarer basischer Rest ist, umsetzt.

**Claims**

1. Use of a dye of the formula

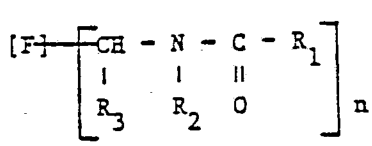

(1)

in which F is the radical of an indigoid dye, of a benzothioxanthene or of a water-insoluble aromatic dye which contains at least 4 alicyclic and/or heterocyclic fused six-membered rings and at least two ring keto groups, $R_1$ is a radical of the formula

$$-A-Q \qquad (2)$$

in which A is a substituted or unsubstituted $C_{1-4}$alkylene radical and Q is a basic radical which may be quaternised, and $R_2$ is hydrogen or a substituted or unsubstituted $C_{1-4}$alkyl radical, and $R_3$ is hydrogen, a substituted or unsubstituted $C_{1-4}$alkyl radical, a substituted or unsubstituted aryl radical, a $C_{1-4}$alkoxycarbonyl radical or an N,N-di-$C_{1-4}$alkylcarboxamide radical and n is 1, 2, 3 or 4, for dyeing textile cellulose material and paper.

2. A dye of the formula

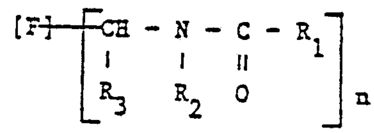

in which F is the radical of an indigoid dye, of a benzothioxanthene or of a water-insoluble aromatic dye which contains at least 4 alicyclic and/or heterocyclic fused six-membered rings and at least two ring keto groups, $R_1$ is a radical of the formula

$$-A-Q \qquad (2)$$

in which A is a substituted or unsubstituted $C_{1-4}$alkylene radical and Q is a basic radical which may be quaternised, and $R_2$ is hydrogen or a substituted or unsubstituted $C_{1-4}$alkyl radical, and $R_3$ is hydrogen, a substituted or insubstituted $C_{1-4}$alkyl radical, a substituted or unsubstituted aryl radical, a $C_{1-4}$alkoxycarbonyl radical or an N,N-di-$C_{1-4}$alkylcarboxamide radical and n is 1, 2, 3 or 4, with the exteption of the dye of the formula

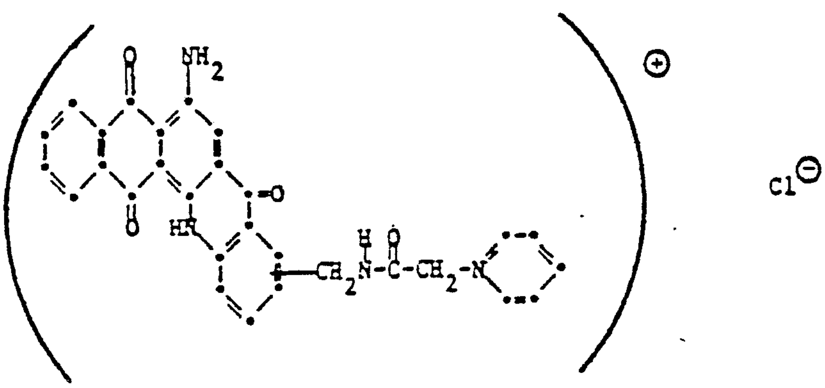

3. A dye according to claim 2, in which F is the radical of a vattable indanthrone, flavanthrone, anthraquinoneacridone, anthraquinonethioxanthone, thiophenebenzanthrone, anthraquinonecarbazole, pyranthrone, anthanthrone, dibenzopyrenequinone, isodibenzopyrenequinone, dibenzanthrone, isodibenzanthrone, perylenetetracarboxylic acid imide, naphthoylenebenzimidazole or naphthoquinone dye, a radical of an indigoid dye or a radical of a perinone or benzothioxanthene dye, which dye radicals may be unsubstituted or substituted by halogen, alkyl, alkoxy, aryl, aryloxy, aralkyl, aralkoxy, ,arylamino, alkylthio, arylthio, alkylamino, cyano, thiocyano, hydroxy, acyl or acylamino, and $R_1$, $R_2$, $R_3$ and n are as defined in claim 2.

4. A dye according to claim 2, in which Q in formula (2) is a radical of the formula

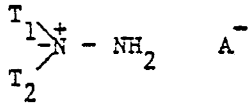 (3) ,

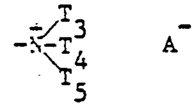 (4)

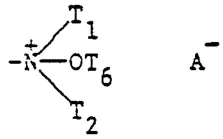 (5) or

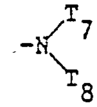 (6)

in which formulae (3) to (6) each of $T_1$, $T_2$, $T_3$, $T_4$ and $T_8$ independently of the other is a $C_{1-4}$alkyl radical which is unsubstituted or substituted by hydroxy, each of $T_5$ and $T_6$ independently of the other is a $C_{1-4}$alkyl radical, $T_7$ is hydrogen, a $C_{1-4}$alkyl radical which is unsubstituted or substituted by hydroxy, a cyclohexyl radical which is unsubstituted by hydroxy, a cyclohexyl radical which is unsubstituted or substituted by 1 to 3 methyl groups, or is a phenyl radical, or in which formulae (3) to (6) the radicals $T_1$ and $T_2$, $T_3$ and $T_4$, or $T_7$ and $T_8$, together with the nitrogen atom, are a pyrrolidine, piperidine, morpholine or piperazine ring, or in which the radicals $T_3$, $T_4$ and $T_5$, together with the nitrogen atom, are a pyridinium ring or a radical of the formula

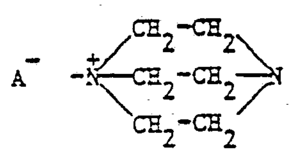

(7)

and $A^-$ in the formulae (3) to (5) and (7) is an organic or inorganic anion, and F, $R_2$, $R_3$, A and n are as defined in claim 2.

5. A dye according to claim 4, in which $R_2$ is hydrogen or a $C_{1-4}$alkyl radical which is unsubstituted or substituted by chlorine, $R_3$ is hydrogen, a $C_{1-4}$alkyl radical which is unsubstituted or substituted by chlorine, or is a substituted or unsubstituted phenyl radical, and F, A, $A^-$, Q and n are as defined.

6. A dye according to claim 5, in which F is a radical of a dibenzanthrone, isodibenzanthrone, 16,17-ethylenedioxydibenzanthrone, 2,2'-dibenzanthronyl, 2,2'-bisindolindigo, 2,2'-bisthionaphtheneindigo, cis- or trans-naphthoylenebenzimidazole, benzothioxanthene, N,N'-di-p-tolylperylenetetracarboxylic acid diimide, N,N'-di-p-phenethoxynaphthalene-1,4,5,8-tetracarboxylic acid diimide, 5,5'-bisnaphthyl-1,1',8,8'-tetracarboxylic acid dibenzimidazole, 5,5'-bis-naphthyl-1,1',8',8'-tetracarboxylic acid 6'',6'''-dimethyldibenzimidazole, 5,5'-bisnaphthyl-1,1',8,8'-tetracarboxylic acid 5'',5''',6'',6'''-tetramethoxydibenzimidazole or 16,17-methylenedioxydibenzanthrone dye, or a radical of the formula

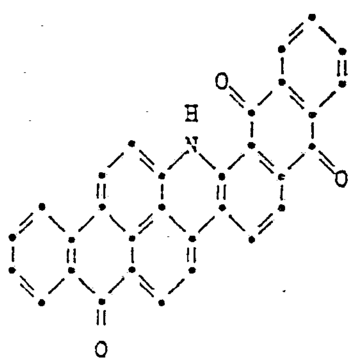

(8)

or

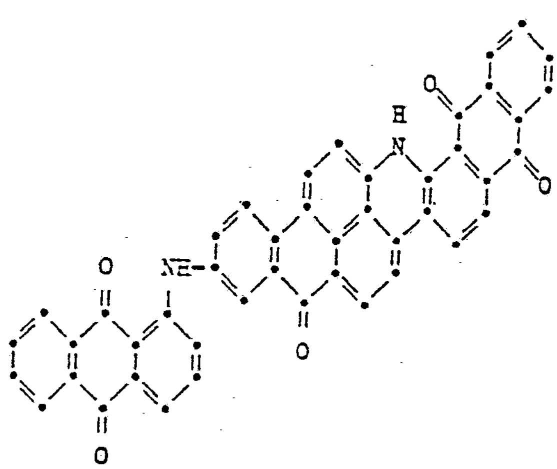

(9)

$R_2$ and $R_3$ are hydrogen, A is a methylene radical, Q is a pyridinium radical, $A^-$ is a chloride ion and n is 1 or 2.

7. The dye according to claim 6 of the formula

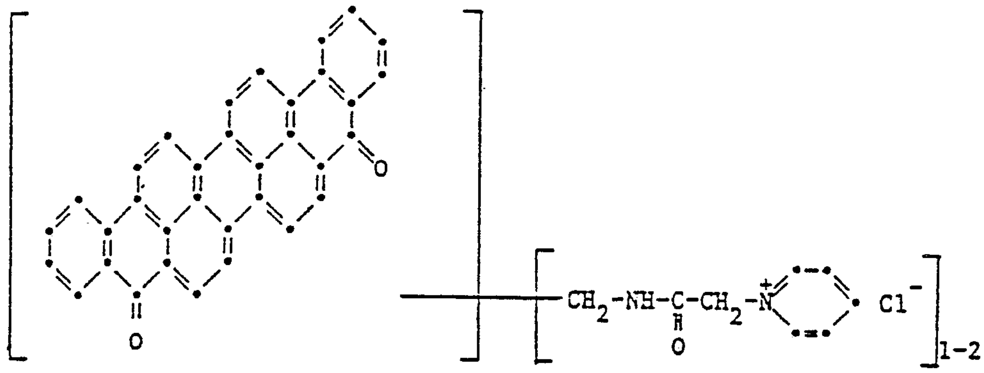

(10).

8. The dye according to claim 6 of the formula

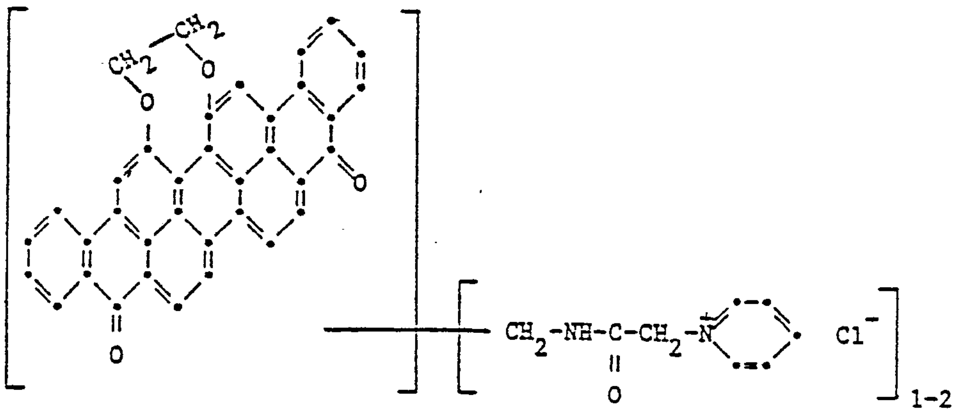

(11).

9. The dye according to claim 6 of the formula

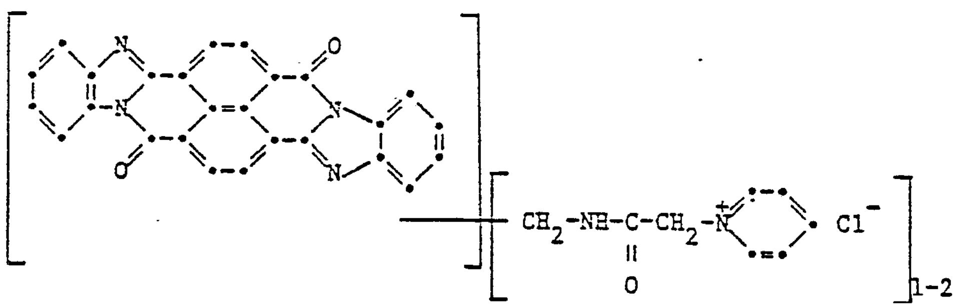

(12).

10. The dye according to claim 6 of the formula

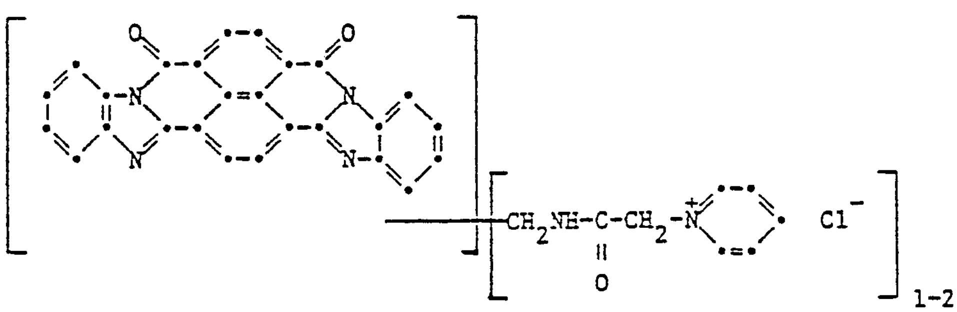

(13).

11. The dye according to claim 6 of the formula

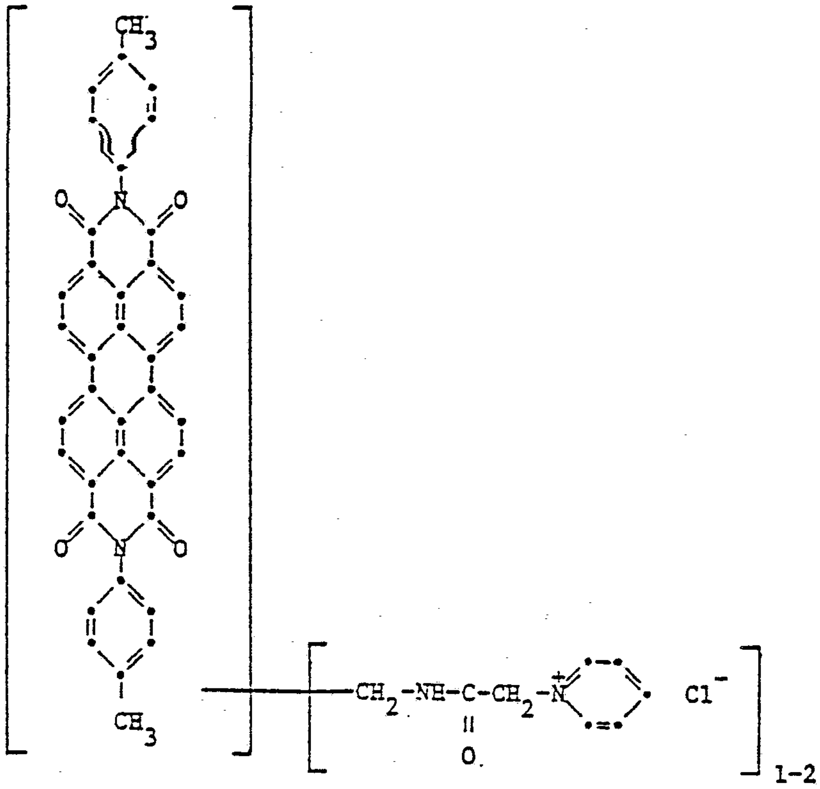

(14).

12. The dye according to claim 6 of the formula

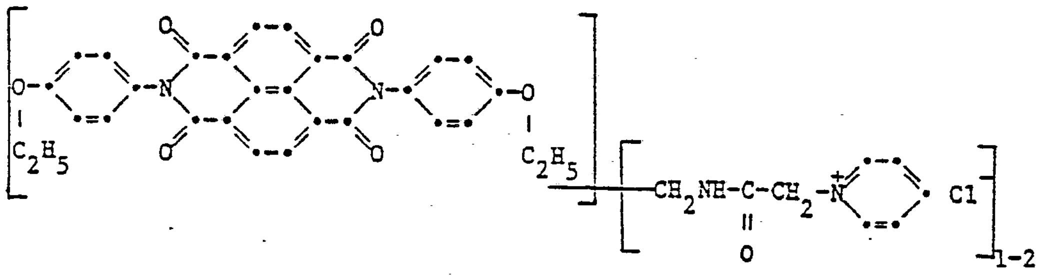

(15).

13. The dye according to claim 6 of the formula

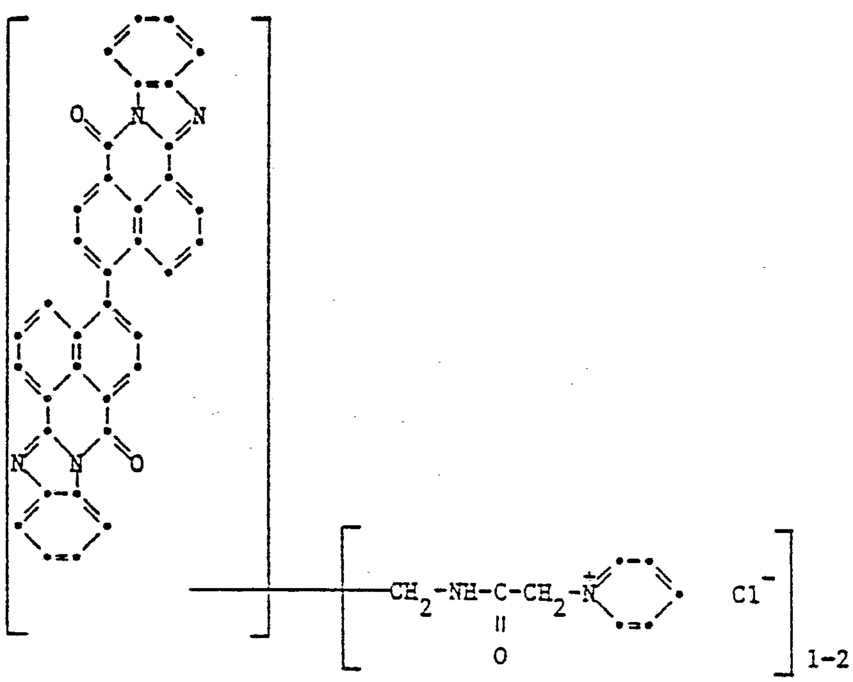

(16).

14. The dye according to claim 6 of the formula

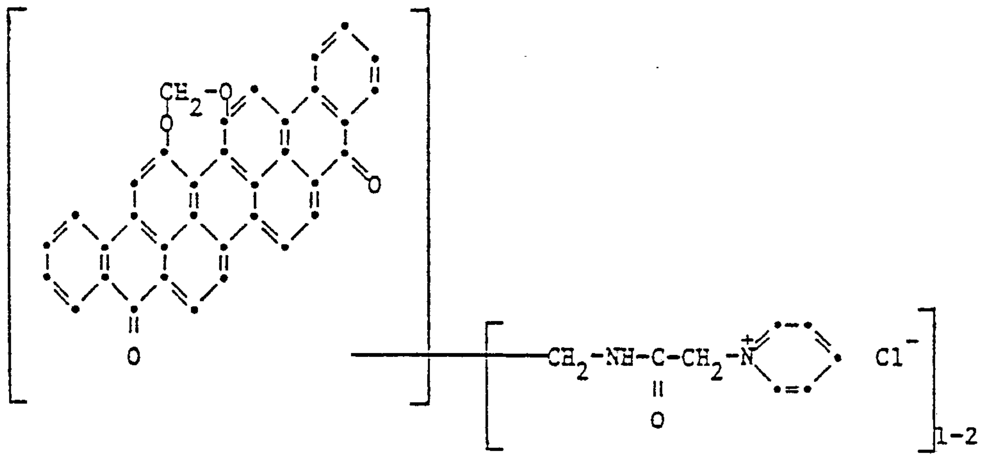

(17).

15. A dye according to claim 2 of the formula

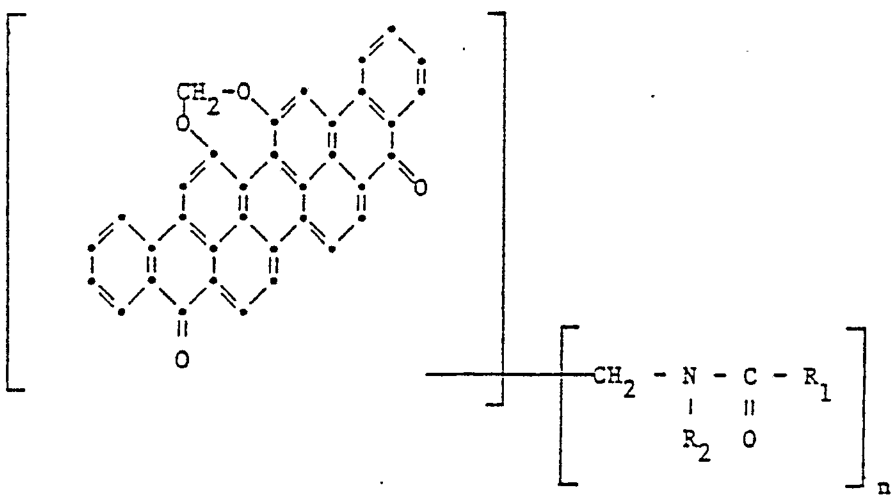

(30)

in which $R_1$, $R_2$ and n are as defined in claim 2.

16. A dye mixture which contains, as components, dyes of the formula

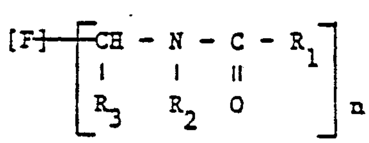

(1)

in which the value of n in the individual components independently of one another is 1, 2, 3 or 4 and F, $R_1$, $R_2$ and $R_3$ in the individual components are identical, and, optionally a component of the formula

F—H (20)

in which the radical F in the formulae (1) and (20) is identical and is the radical of an indigoid dye, of a benzothioxanthene or of a water-insoluble aromatic dye which contains at least 4 alicyclic and/or heterocyclic fused six-membered rings and at least two ring keto groups, and in which formula (1) $R_1$ is a radical of the formula

—A—Q (2)

in which A is a substituted or unsubstituted $C_{1-4}$ alkylene radical and Q is a basic radical which may be

quaternised, and $R_2$ is hydrogen or a substituted or unsubstituted $C_{1-4}$ alkyl radical, and $R_3$ is hydrogen, a substituted or unsubstituted $C_{1-4}$ alkyl radical, a substituted or unsubstituted aryl radical, a $C_{1-4}$ alkoxycarbonyl radical or an N,N-di-$C_{1-4}$ alkylcarboxamide radical.

17. A process for the preparation of a dye of the formula (1) according to claim 2

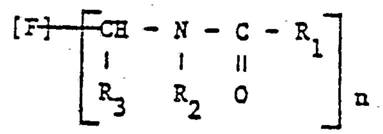 (1)

in which F is the radical of an indigoid dye, of a benzothioxanthene or of a water-insoluble aromatic dye which contains at least 4 alicyclic and/or heterocyclic fused six-membered rings and at least two ring keto groups, $R_1$ is a radical of the formula

$$—A—Q \quad (2)$$

in which A is a substituted or unsubstituted $C_{1-4}$ alkylene radical and Q is a basic radical which may be quaternised, and $R_2$ is hydrogen or a substituted or unsubstituted $C_{1-4}$ alkyl radical, and $R_3$ is hydrogen, a substituted or unsubstituted $C_{1-4}$ alkyl radical, a substituted or unsubstituted aryl radical, a $C_{1-4}$ alkoxycarbonyl radical or an N,N-di-$C_{1-4}$ alkylcarboxamide radical and n is 1, 2, 3 or 4, with the exception of the dye of the formula

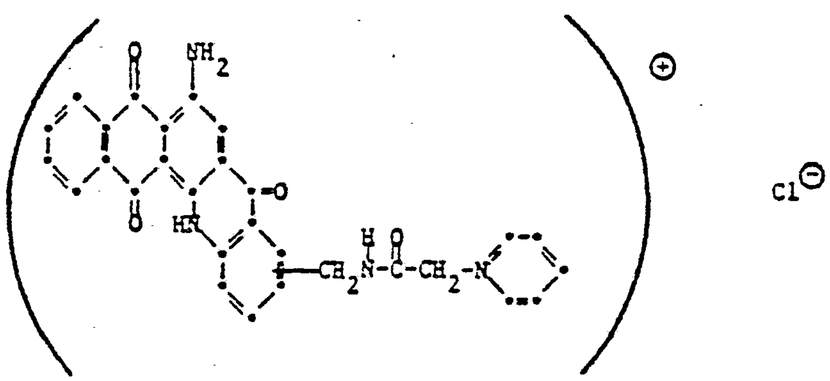

which process comprises condensing a dye of the formula

$$F—H \quad (20)$$

in which F is as defined for formula (1), with at least one equivalent of a compound of the formula

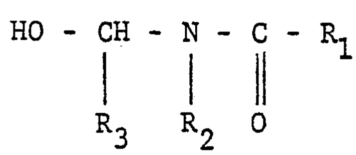 (21)

in which $R_1$ is a radical of the formula

$$—A—X \quad (22)$$

in which A is a substituted or unsubstituted $C_{1-4}$ alkylene radical and X is a radical which can be converted into an anion, and $R_2$ and $R_3$ are as defined for formula (1), and subsequently reacting the product with at least one equivalent of a compound of the formula

$$Q' \quad (23)$$

in which Q' is a quaternisable basic radical, to give a dye of the formula (1).

18. A process for the preparation of a dye mixture according to claim 16, which mixture contains, as components, dyes of the formula

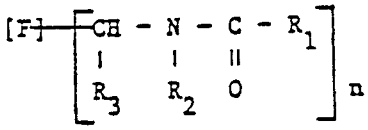

(1)

in which the value of n in the individual components independently of one another is 1, 2, 3, or 4 and F, $R_1$, $R_2$ and $R_3$ in the individual components are identical, and, optionally a component of the formula

F—H (20)

in which the radical F in the formulae (1) and (20) is identical and is the radical of an indigoid dye, of a benzothioxanthene or of a water-insoluble aromatic dye which contains at least 4 alicyclic and/or heterocyclic fused six-membered rings and at least two ring keto groups and in which formula (1) $R_1$ is a radical of the formula

—A—Q (2)

in which A is a substituted or unsubstituted $C_{1-4}$ alkylene radical and Q is a basic radical which may be quaternised, and $R_2$ is hydrogen or a substituted or unsubstituted $C_{1-4}$ alkyl radical, and $R_3$ is hydrogen, a substituted or unsubstituted $C_{1-4}$ alkyl radical, a substituted or unsubstituted aryl radical, a $C_{1-4}$ alkoxycarbonyl radical or an N,N-di-$C_{1-4}$ alkylcarboxamide radical, with the exception of the dye of the formula

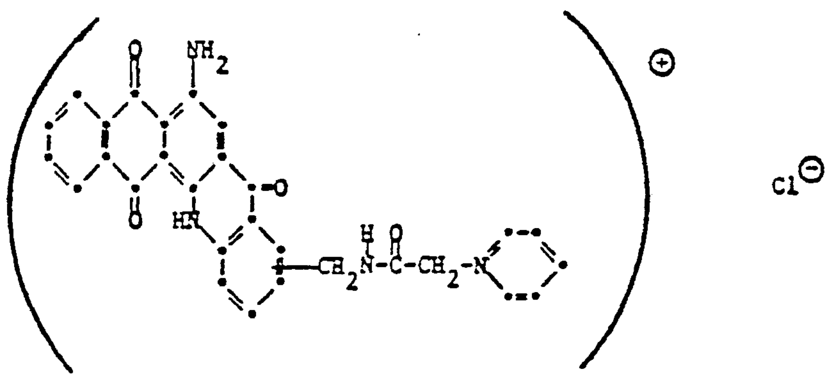

which process comprises condensing a dye of the formula (20), in which F is as defined for formula (20), with a compound of the formula

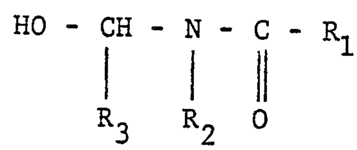

(21)

in which $R_1$ is a radical of the formula

—A—X (22)

in which A is a substituted or unsubstituted $C_{1-4}$ alkylene radical and X is a radical which can be converted into an anion, and $R_2$ and $R_3$ are as defined for formula (1), and subsequently reacting the mixture of products with a compound of the formula

Q' (23)

in which Q' is a quaternisable basic radical.

**Revendications**

1. Utilisation de colorants de formule

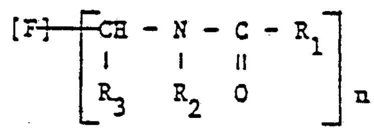

(1),

où F est le résidu d'un colorant indigoïde, d'un benzothioxanthène ou d'un colorant aromatique, insoluble dans l'eau, contenant au moins 4 noyaux hexagonaux condensés, alicycliques et/ou hétérocycliques, et au moins deux groupes céto cycliques ; $R_1$ est un radical de formule

$$—A—Q \quad (2)$$

où A est un radical alkylène à 1 à 4 atomes de carbone éventuellement substitué, et Q est un radical basique éventuellement quaternisé, $R_2$ est l'hydrogène ou un radical alkyle à 1 à 4 atomes de carbone éventuellement substitué, et $R_3$ est l'hydrogène, un radical alkyle à 1 à 4 atomes de carbone éventuellement substitué, un radical aryle éventuellement substitué, un radical (alcoxy en $C_{1-4}$)-carbonyle ou un radical N,N-di-(Alkyl en $C_{1-4}$) carboxamide, et n vaut 1, 2, 3 ou 4, pour la teinture de matières cellulosiques textiles et de papier.

2. Colorants de formule

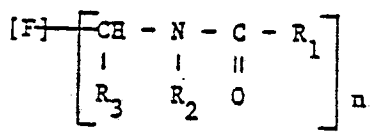

(1),

où F est le résidu d'un colorant indigoïde, d'un benzothioxanthène ou d'un colorant aromatique, insoluble dans l'eau, contenant au moins 4 noyaux hexagonaux condensés, alicycliques et/ou hétérocycliques, et au moins deux groupes céto cycliques, $R_1$ est un radical de formule

$$—A—Q \quad (2)$$

où A est un radical alkylène à 1 à 4 atomes de carbone éventuellement substitué, et Q est un radical basique éventuellement quaternisé, $R_2$ est l'hydrogène ou un radical alkyle à 1 à 4 atomes de carbone éventuellement substitué, et $R_3$ est l'hydrogène, un radical alkyle à 1 à 4 atomes de carbone éventuellement substitué, un radical aryle éventuellement substitué, un radical (alcoxy en $C_{1-4}$)-carbonyle ou un radical N,N-di-(alkyl en $C_{1-4}$)-carboxamide, et n vaut 1, 2, 3 ou 4, à l'exception du colorant de formule

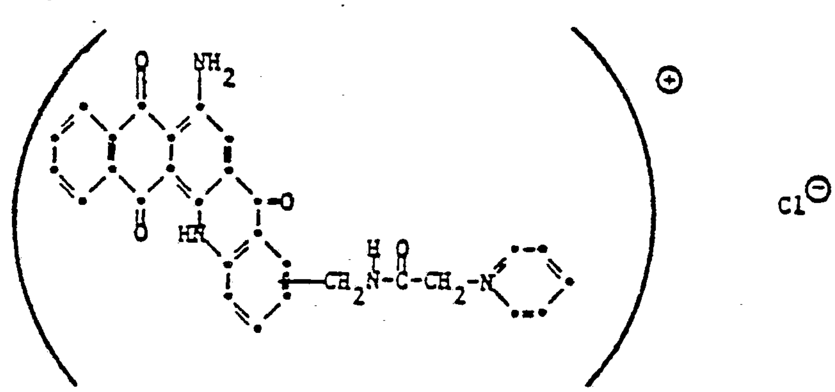

3. Colorants selon la revendication 2, où F est le résidu d'un colorant cuvable d'indanthrone, de flavanthrone, d'anthraquinone-acridone, d'anthraquinone-thioxanthone, de thiophènebenzanthrone, d'anthraquinone-carbazole, de pyranthrone, d'anthanthrone, de dibenzopyrène-quinone, d'isodibenzopyrène-quinone, de dibenzanthrone, d'isodibenzanthrone, de pérylènetétracarboximide, de naphtoylènebenzimidazole, ou de naphtoquinone, un résidu de colorant indigoïde ou un résidu de colorant de périnone ou de benzothioxanthène, où les résidus de colorant peuvent être éventuellement substitués par un halogène, un radical alkyle, alcoxy, aryle, aryloxy, aralkyle, aralcoxy, arylamino, alkylthio, arylthio, alkylamino, cyano, thiocyano, hydroxyle, acyle ou acylamino, et $R_1$, $R_2$, $R_3$ et n ont la signification donnée dans la revendication 2.

4. Colorants selon la revendication 2, où Q, dans la formule (2), est un radical de formule

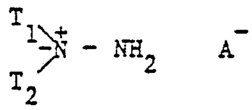 (3) , 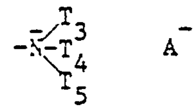 (4)

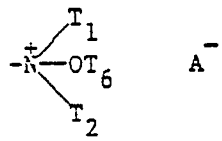 (5) ou 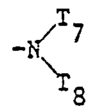 (6)

où, dans les formules (3) à (6), $T_1$, $T_2$, $T_3$, $T_4$ et $T_8$, indépendamment les uns des autres, sont chacun un groupe alkyle à 1 à 4 atomes de carbone éventuellement substitué par un groupe hydroxyle $T_5$ et $T_6$, indépendamment l'un de l'autre, sont chacun un radical alkyle à 1 à 4 atomes de carbone ; $T_7$ est l'hydrogène, un radical alkyle à 1 à 4 atomes de carbone éventuellement substitué par un groupe hydroxyle, un radical cyclohexyle ou phényle éventuellement substitué par 1 à 3 groupes méthyle ou bien où les radicaux $T_1$ et $T_2$, $T_3$ et $T_4$, ou $T_7$ et $T_8$ forment, avec l'atome d'azote, un noyau pyrrolidine, pipéridine, morpholine ou pipérazine, et où les radicaux $T_3$, $T_4$ et $T_5$ forment, avec l'atome d'azote, un noyau pyridinium ou un radical de formule

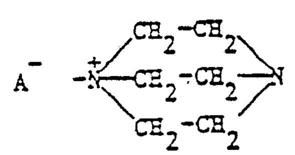 (7)

et $A^-$, dans les formules (3) à (5) et (7), est un anion organique ou inorganique, et F, $R_2$, $R_3$, A et n ont la signification donnée dans la revendication 2.

5. Colorants selon la revendication 4, où $R_2$ est l'hydrogène ou un radical alkyle à 1 à 4 atomes de carbone éventuellement substitué par le chlore ; $R_3$ est l'hydrogène, un radical alkyle à 1 à 4 atomes de carbone éventuellement substitué par le chlore, ou un radical phényle éventuellement substitué, et F, A, $A^-$, Q et n ont la signification donnée ci-dessus.

6. Colorants selon la revendication 5, où F est un résidu de colorant de dibenzanthrone, d'isodibenzanthrone, de 16,17-éthylènedioxydibenzanthrone, de 2,2'-dibenzanthronyle, de 2,2'-bisindolindigo, de 2,2'-bisthionaphtène-indigo, de cis- ou trans-naphtoylènebenzimidazole, de benzothioxanthène, de N,N'-di-p-tolyl-perylène-tétracarboxydiimide, de N,N'-di-p-phénétoxynaphtalène-1,4,5,8-tétracarboxydiimide, de 5,5'-bisnaphtyl-1,1',8,8'-tétracarboxy-dibenzimidazole, de 5,5'-bisnaphtyl-1,1',8,8'-tétracarboxy-6'',6'''-diméthyldibenzimidazole, de 5,5'-bisnaphtyl-1,1'-8,8'-tétracarboxy-5'',5''',6'',6'''-tétraméthoxydibenzimidazole ou de 16,17-méthylènedioxydibenzanthrone, ou un radical de formule

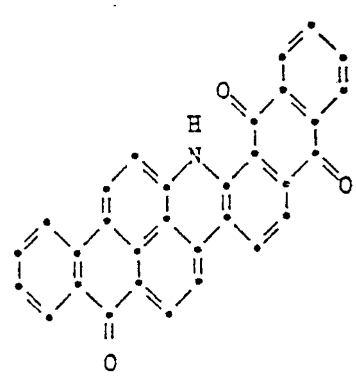 (8)

ou

(Siehe Figur Seite 36 f.)

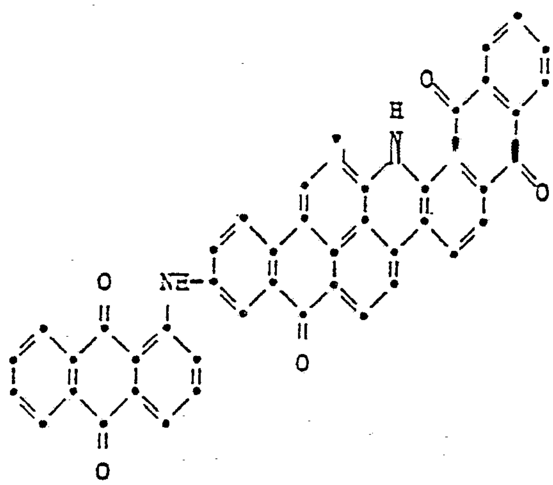

(9)

$R_2$ et $R_3$ est l'hydrogène ; A un radical méthylène ; Q un radical pyridinium ; $A^-$ un ion chlorure, et n vaut 1 ou 2.

7. Colorant selon la revendication 6, de formule

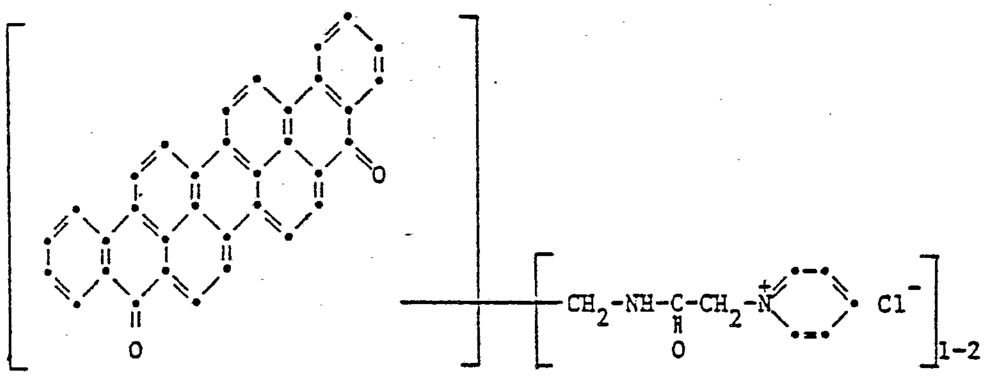

(10)

8. Colorant selon la revendication 6, de formule

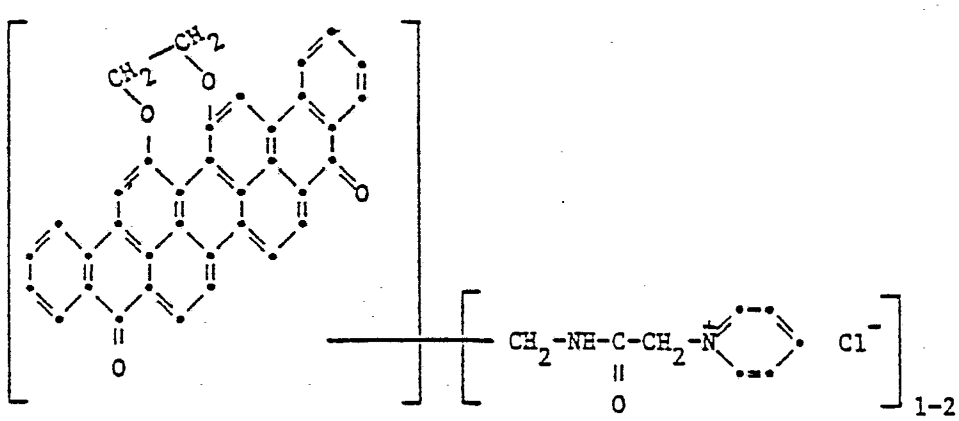

(11).

9. Colorant selon la revendication 6, de formule

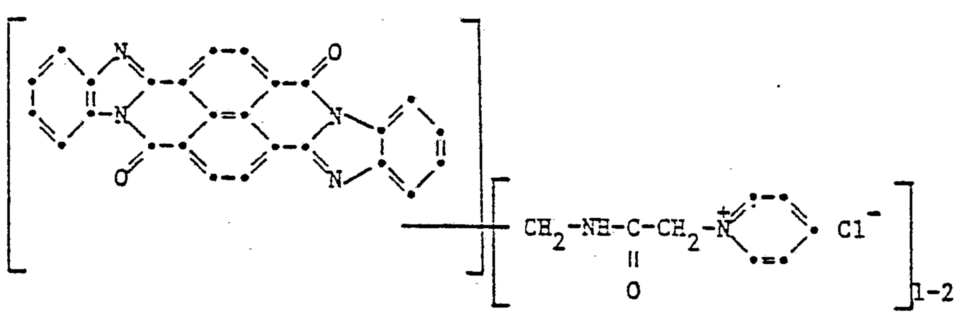

(12).

10. Colorant selon la revendication 6, de formule

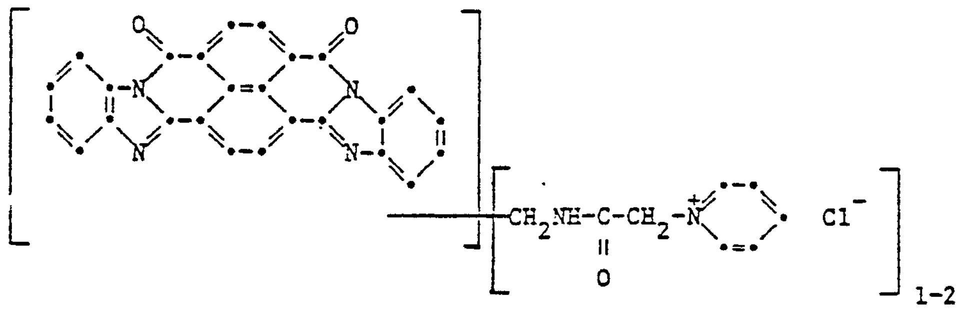

(13).

11. Colorant selon la revendication 6, de formule

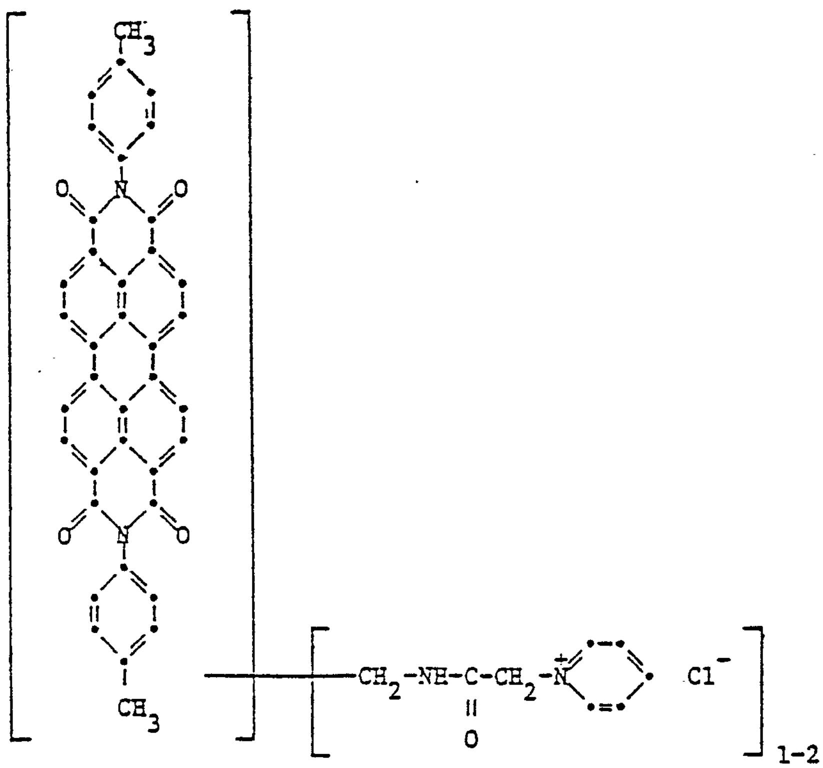

(14).

12. Colorant selon la revendication 6, de formule

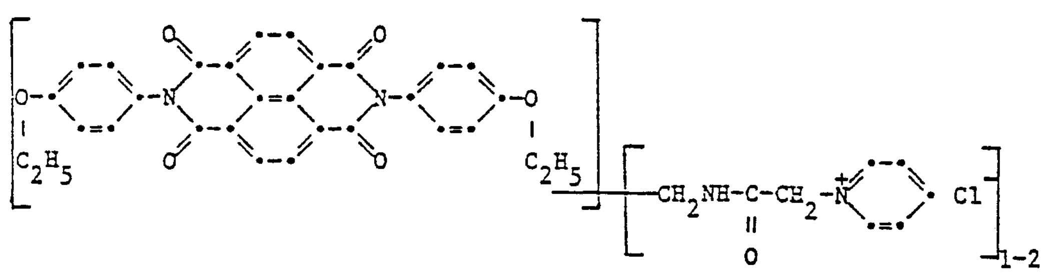

(15).

13. Colorant selon la revendication 6, de formule

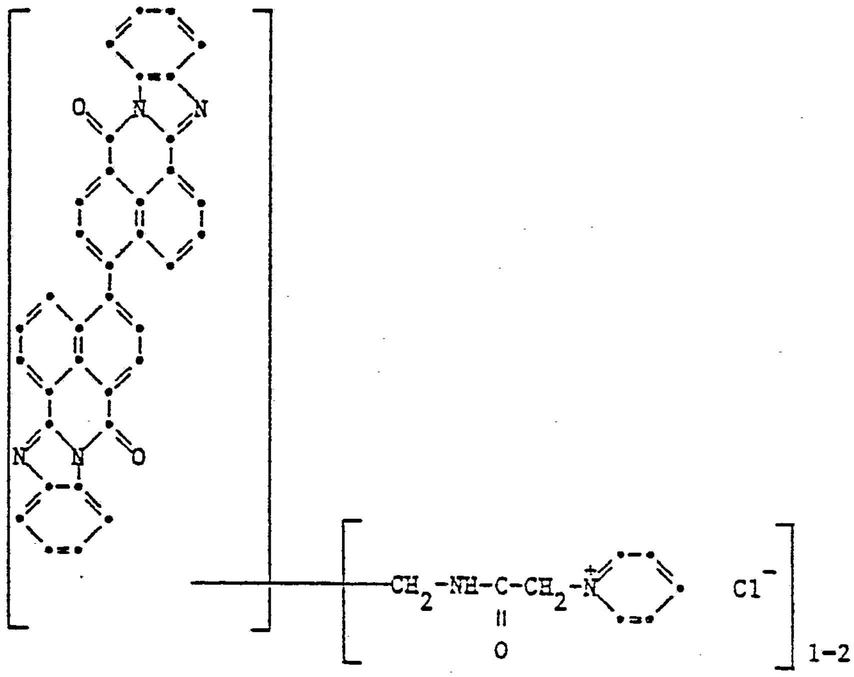

(16).

14. Colorant selon la revendication 6, de formule

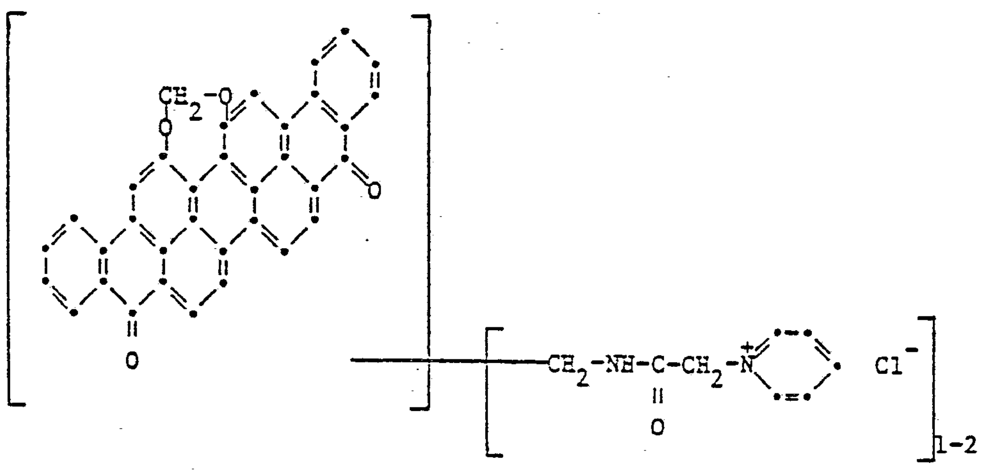

(17).

15. Colorants selon la revendication 2, de formule

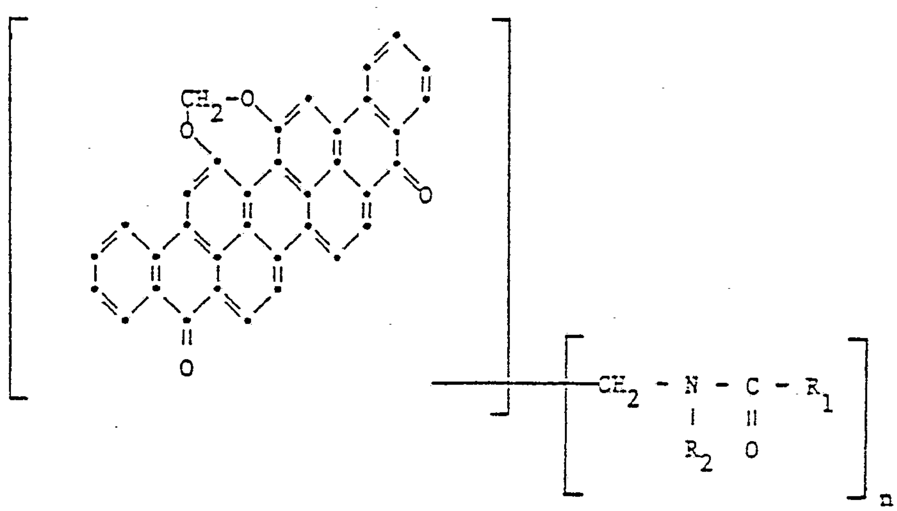

(30)

où $R_1$, $R_2$ et n ont la signification donnée dans la revendication 2.

16. Mélanges de colorants, qui contiennent en tant que composants du mélange des colorants de formule

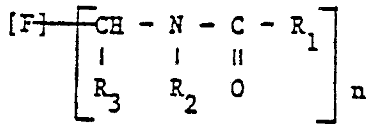 (1),

où n, dans les différents composants, indépendamment les uns des autres, vaut 1, 2, 3 ou 4, et F, $R_1$, $R_2$ et $R_3$ sont identiques dans les différents composants, et éventuellement un composant de formule

$$F—H \quad (20)$$

où le radical F, dans les formules (1) et (20), est le même, et F est le résidu d'un colorant indigoïde, d'un benzothioxanthène ou d'un colorant aromatique insoluble dans l'eau contenant au moins 4 noyaux hexagonaux condensés, alicycliques et/ou hétérocycliques, et au moins deux groupes céto cyclique, et où, dans la formule (1), $R_1$ est un radical de formule

$$—A—Q \quad (2)$$

où A est un radical alkylène à 1 à 4 atomes de carbone éventuellement substitué, et Q est un radical basique éventuellement quaternisé ; $R_2$ est l'hydrogène ou un radical alkyle à 1 à 4 atomes de carbone éventuellement substitué, et $R_3$ est l'hydrogène, un radical alkyle à 1 à 4 atomes de carbone éventuellement substitué, un radical aryle éventuellement substitué, un radical (alcoxy en $C_{1-4}$) carbonyle ou un radical N,N-di-(alkyl en $C_{1-4}$) carboxamide.

17. Procédé pour la préparation de colorants de formule (1)

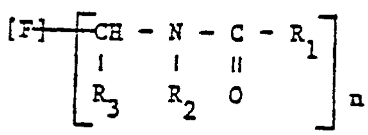 (1),

selon la revendication 2, où F est le résidu d'un colorant indigoïde, d'un benzothioxanthène ou d'un colorant aromatique, insoluble dans l'eau, contenant au moins 4 noyaux hexagonaux condensés, alicycliques et/ou hétérocycliques, et au moins deux groupes céto cycliques ; $R_1$ est un radical de formule

$$—A—Q \quad (2)$$

où A est un radical alkylène à 1 à 4 atomes de carbone éventuellement substitué, et Q est un radical éventuellement quaternisé ; $R_2$ est l'hydrogène ou un radical alkyle à 1 à 4 atomes de carbone éventuellement substitué, et $R_3$ est l'hydrogène, un radical alkyle à 1 à 4 atomes de carbone éventuellement substitué, un radical aryle éventuellement substitué, un radical (alcoxy en $C_{1-4}$) carbonyle ou un radical N,N-di-(alkyl en $C_{1-4}$)-carboxamide, et n vaut 1, 2, 3 ou 4, à l'exception du colorant de formule

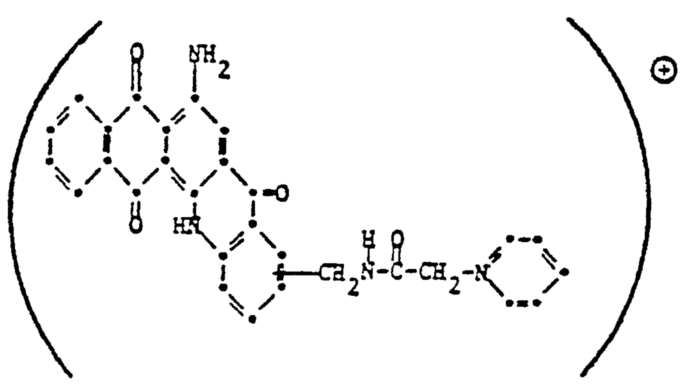 $Cl^{\ominus}$

caractérisé en ce qu'on condense un colorant de formule

$$F—H \qquad (20)$$

où F a la signification donnée pour la formule (1), avec au moins un équivalent d'un composé de formule

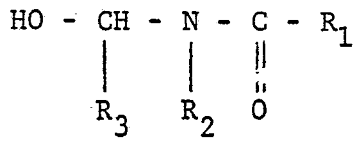

(21)

où $R_1$ est un radical de formule

$$—A—X \qquad (22)$$

où A est un radical alkylène à 1 à 4 atomes de carbone éventuellement substitué, et X est un radical pouvant être converti en un anion ; $R_2$ et $R_3$ ont la signification donnée pour la formule (1), et qu'on fait ensuite réagir le produit de réaction sur au moins un équivalent d'un composé de formule

$$Q' \qquad (23)$$

où Q' est un radical basique quaternisable, pour donner un colorant de formule (1).

18. Procédé pour la préparation de mélanges de colorants selon la revendication 16, qui contiennent en tant que composants du mélange des colorants de formule

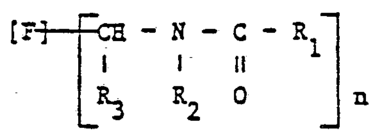

(1),

où n, dans les différents composants, indépendamment les uns des autres, vaut 1, 2, 3 ou 4, et F, $R_1$, $R_2$ et $R_3$, dans les différents composants, sont identiques, et éventuellement un composant de formule

$$F—H \qquad (20)$$

où le radical F est identique dans les formules (1) et (20), et F est le résidu d'un colorant indigoïde, d'un benzothioxanthène ou d'un colorant aromatique, insoluble dans l'eau, contenant au moins 4 noyaux hexagonaux condensés, alicycliques et/ou hétérocycliques, et au moins deux groupes céto cycliques, et où, dans la formule (1), $R_1$ est un radical de formule

$$—A—Q \qquad (2)$$

où A est un radical alkylène à 1 à 4 atomes de carbone éventuellement substitué ; Q est un radical basique éventuellement quaternisé ; $R_2$ est l'hydrogène ou un radical alkyle à 1 à 4 atomes de carbone éventuellement substitué, et $R_3$ est l'hydrogène, un radical alkyle à 1 à 4 atomes de carbone éventuellement substitué, un radical aryle éventuellement substitué, un radical (alcoxy en $C_{1-4}$) carbonyle ou un radical N,N-di-(alkyl en $C_{1-4}$) carboxamide, à l'exception du colorant de formule

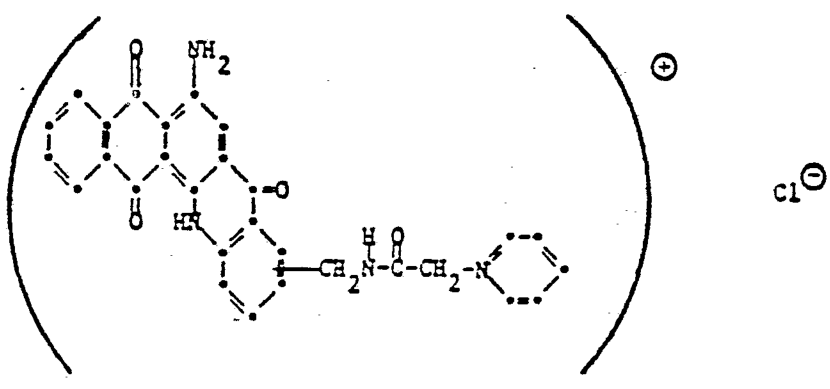

caractérisé en ce qu'on condense un colorant de formule (20), où F a la signification donnée pour la formule (20), avec un composé de formule

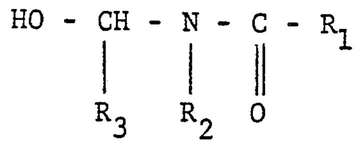

(21)

où $R_1$ est un radical de formule

$$—A—X \qquad (22)$$

où A est un radical alkylène à 1 à 4 atomes de carbone éventuellement substitué, et X est un radical pouvant être converti en un anion, $R_2$ et $R_3$ ont la signification donnée pour la formule (1), et qu'on fait réagir ensuite le mélange des produits de réaction avec un composé de formule

$$Q' \qquad (23)$$

où Q' est un radical basique éventuellement quaternisable.